# EUROPEAN PATENT APPLICATION

(11) **EP 4 668 062 A1**
(43) Date of publication of application: **24.12.2025**
(21) Application number: 25164552.9
(22) Date of filing: 18.03.2025
(51) Int. Cl.: G06F 1/3225, G06F 1/3234, G06F 3/06

(54) **UNIVERSAL FLASH STORAGE DEVICE AND SYSTEM AND OPERATION METHODS OF THE SAME**

(30) Priority: 20.06.2024 KR 20240080417; 15.01.2025 US 202519023056
(71) Applicant: Samsung Electronics Co., Ltd., Suwon-si, Gyeonggi-do 16677 (KR)
(72) Inventor: CHOE, Gyuseok, 16677 Suwon-si (KR); SHIN, Myungsub, 16677 Suwon-si (KR); SEO, Sungho, 16677 Suwon-si (KR); JEON, Sangjin, 16677 Suwon-si (KR)
(74) Representative: Marks & Clerk LLP

(57) **Abstract**

Disclosed is an operation method of a universal flash storage (UFS) device which communicates with a UFS host through a device physical layer. The operation method includes monitoring an internal operation status, changing a power mode of the device physical layer to a low-speed mode, based on the internal operation status, transmitting a first power mode change request to the UFS host, receiving a first power mode change confirmation from the UFS host, and operating based on the low-speed mode with the UFS host through the device physical layer, in response to the first power mode change confirmation.

## Description

### BACKGROUND

Semiconductor memory is classified as either a volatile memory, which loses data stored therein when a power is turned off, such as a static random access memory (SRAM), or a dynamic random access memory (DRAM) or a nonvolatile memory, which retains data stored therein even when a power is turned off, such as a flash memory, a phase-change RAM (PRAM), a magnetic RAM (MRAM), a resistive RAM (RRAM), or a ferroelectric RAM (FRAM).

Flash memory devices are widely used as a high-capacity storage medium of a computing system. Various technologies for supporting a high-speed operation of the flash memory device are being developed. As an example, a universal flash storage (UFS) interface defined by the JEDEC standard may support an improved operating speed compared to a conventional flash memory-based storage device.

### SUMMARY

The present disclosure provides a universal flash storage device, an operation method of the universal flash storage device, and an operation method of a universal flash storage system. In some implementations, the universal flash storage device, the universal flash storage system, and operation methods thereof can provide improved performance and reduced power consumption.

In a first general aspect, an operation method of a universal flash storage (UFS) device that communicates with a UFS host through a device physical layer includes monitoring an internal operation status, changing a power mode of the device physical layer to a low-speed mode, based on the internal operation status, transmitting a first power mode change request to the UFS host, receiving a first power mode change confirmation from the UFS host, and operating based on the low-speed mode with the UFS host through the device physical layer, in response to the first power mode change confirmation.

In a second general aspect, a universal flash storage (UFS) device includes a memory device, a UFS device UFS interconnect layer (UIC) that communicates with a UFS host through a reception channel and a transmission channel, and a UFS device controller that controls the memory device, based on a command received from the UFS host through the UFS device UIC. The UFS device controller monitors an internal operation status of the UFS device, and changes a power mode of the reception channel or the transmission channel from a high-speed mode to a low-speed mode, based on the internal operation status.

In a third general aspect, an operation method of a universal flash storage (UFS) system which includes a UFS host and a UFS device includes setting a power mode of a reception channel and a transmission channel between the UFS host and the UFS device to a high-speed mode, through an initialization operation, and changing, by the UFS device, the power mode of the reception channel or the transmission channel to a low-speed mode based on an internal operation status of the UFS device, and the power mode indicates a link speed of the reception channel or the transmission channel.

At least some of the above and other features of the invention are set out in the claims.

### BRIEF DESCRIPTION OF THE FIGURES

FIG. 1 is a block diagram of an example of a universal flash storage (UFS) system.
FIG. 2 is a flowchart of an example of an operation of a UFS system of FIG. 1.
FIG. 3 is a flowchart of an example of an operation of a UFS device of FIG. 1.
FIG. 4 is a flowchart of an example of an operation of a UFS system of FIG. 1.
FIGS. 5 to 9 are flowcharts of examples of operation methods of a UFS system of FIG. 1.
FIG. 10 is a flowchart of an example of an operation of a UFS system of FIG. 1.
FIG. 11 is a block diagram of an example of a UFS system.
FIG. 12 is a diagram for describing an operation of a UFS system of FIG. 11.
FIG. 13 is a diagram of an example of a hierarchical structure of a UFS device of a UFS system of FIG. 1.
FIG. 14 is a diagram of an example of a UFS system.
FIGS. 15A to 15C are diagrams for describing a form factor of an UFS card.
FIG. 16 is a diagram of an example of a system including a disclosed storage device.

### DETAILED DESCRIPTION

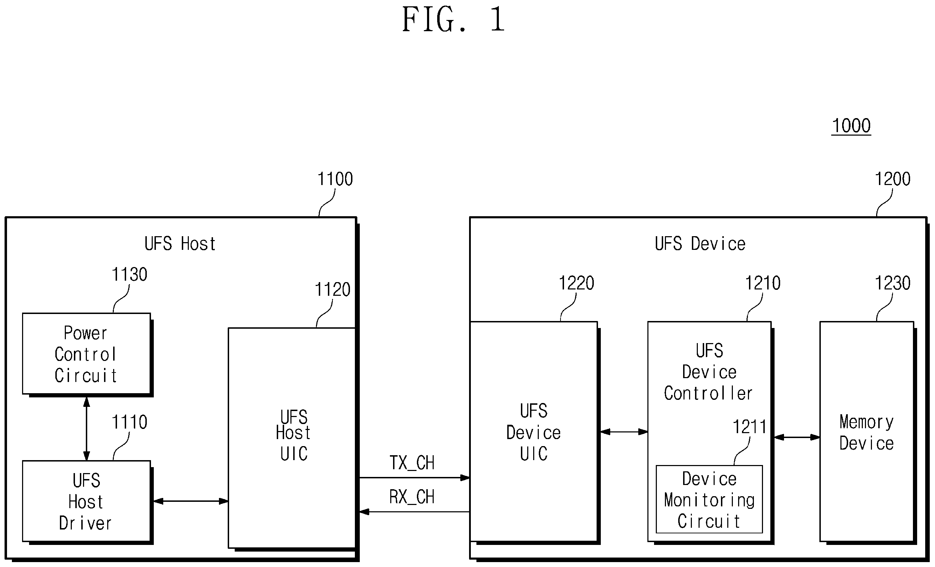

FIG. 1 is a block diagram of an example of a universal flash storage (UFS). Referring to FIG. 1, a UFS system 1000 includes a UFS host 1100 and a UFS device 1200. In some implementations, the UFS system 1000 may include at least one of various information processing devices such as a personal computer, a laptop computer, a server, a workstation, a smartphone, and a tablet PC. Alternatively, the UFS system 1000 may be a data center configured to store and manage various data or a storage server or an application server included in the data center.

The UFS host 1100 may be configured to control the UFS device 1200. For example, the UFS host 1100 may store data in the UFS device 1200 or may read data stored in the UFS device 1200. In some implementations, the UFS host 1100 and the UFS device 1200 may communicate to comply with the UFS standard. The UFS host 1100 may control the UFS device 1200 based on the UFS standard.

The UFS host 1100 may include a UFS host driver 1110, a UFS host UFS interconnect layer (UIC) 1120, and a power control circuit 1130. The UFS device 1200 may include a UFS device controller 1210, a UFS device UIC 1220, and a memory device 1230.

The UFS host driver 1110 may convert various requests sent by the UFS host 1100 into a command or information appropriate for the UFS standard. For example, the UFS host 1100 may be a central processing unit (CPU) or an application processor (AP) configured to control various operations of the UFS system 1000. The UFS host 1100 may include or drive various applications configured to control the UFS system 1000. Various applications may issue a request for accessing the UFS device 1200. The UFS host driver 1110 may convert requests issued from various applications into commands or information appropriate for the UFS standard. In some implementations, the commands or information appropriate for the UFS standard may be in the form of a UFS protocol information unit (UPIU).

The UFS host UIC 1120 may receive the commands or information appropriate for the UFS standard from the UFS host driver 1110. The UFS host UIC 1120 may transmit the command or information to the UFS device 1200. For example, the UFS device UIC 1220 may communicate with the UFS device UIC 1220 through a transmission channel TX_CH and a reception channel RX_CH. The UFS host UIC 1120 may transmit the command or information to the UFS device UIC 1220 through the transmission channel TX_CH. Alternatively, the UFS host UIC 1120 may receive information from the UFS device UIC 1220 through the reception channel RX_CH.

In some implementations, each of the UFS host UIC 1120 and the UFS device UIC 1220 may include a physical layer configured to receive a command, information, or a signal. In some implementations, the physical layer may include an MIPI Unipro and an MIPI M-PHY.

The UFS device 1200 may operate under control of the UFS host 1100. For example, the UFS device controller 1210 may receive a command or information from the UFS host 1100 through the UFS device UIC 1220. The UFS device controller 1210 may perform various operations, for example, a program operation, a read operation, or an erase operation on the memory device 1230, or various maintenance operations, based on the received command or information.

The memory device 1230 may operate under control of the UFS device controller 1210. For example, the memory device 1230 may operate under control of the UFS device controller 1210. In some implementations, the memory device 1230 may include a NAND flash memory device, but the present disclosure is not limited thereto.

In some implementations, the UFS host 1100 may include the power control circuit 1130. The power control circuit 1130 may be configured to manage an operation mode of the UFS system 1000. For example, the power control circuit 1130 may control the operation mode of the UFS system 1000 depending on a state (e.g., an operation state or an idle state) of the UFS system 1000. In some implementations, the operation mode may include an active mode, a pre-active mode, a UFS-sleep mode, a pre-sleep mode, a UFS-deep sleep mode, a pre-deep sleep mode, a UFS-power down mode, a pre-power down mode, etc.

Below, for convenience of description, the term "power mode" is used. Unless otherwise defined, the term "power mode" indicates a power mode for the UFS host UIC 1120 and the UFS device UIC 1220, and the power mode indicates a mode corresponding to a link speed of the reception channel RX_CH and the transmission channel TX_CH. For example, the power mode may indicate a mode, which corresponds to a communication speed between the UFS host UIC 1120 and the UFS device UIC 1220, such as HS-MODE, LS-MODE, or PMW-MODE, and various GEARs (e.g., GEAR1, GEAR2, GEAR3, GEAR4, and GEAR5) corresponding to the high-speed mode HS-MODE may be supported. Also, the transmission channel TX_CH may indicate a channel through which the UFS host UIC 1120 transmits a signal or information to the UFS device UIC 1220. That is, a transmitter of the physical layer of the UFS host UIC 1120 and a receiver of the physical layer of the UFS device UIC 1220 may be connected through the transmission channel TX_CH or may constitute the transmission channel TX_CH. The reception channel RX_CH indicates a channel through which the UFS host UIC 1120 receives a signal or information from the UFS device UIC 1220. That is, a receiver of the physical layer of the UFS host UIC 1120 and a transmitter of the physical layer of the UFS device UIC 1220 may be connected through the reception channel RX_CH or may constitute the reception channel RX_CH. However, the present disclosure is not limited thereto.

In some implementations, the UFS system 1000 may support various power modes. For example, in the initialization operation of the UFS system 1000, the UFS host UIC 1120 of the UFS host 1100 and the UFS device UIC 1220 of the UFS device 1200 may perform a linkup operation. Through the linkup operation, the UFS host UIC 1120 and the UFS device UIC 1220 may set the power mode. In some implementations, the UFS standard supports various power modes such as HS-MODE, LS-MODE, and PWM-MODE. Alternatively, the UFS standard may support various GEARs for the HS-MODE. In this case, each of the power modes or the GEARs may correspond to a communication speed of each channel (e.g., TX_CH and RX_CH) between the UFS host UIC 1120 and the UFS device UIC 1220.

In a conventional UFS system, a UFS host fails to recognize an internal operation situation of a UFS device. Even though the high-speed operation is impossible due to the internal operation of the UFS device, the UFS host and the UFS device maintain the initially set power mode (e.g., HS-MODE). As an example, when the power mode is set to the high-speed mode HS-MODE, even though there is no valid signal transmission/reception, the UFS host UIC 1120 or the UFS device UIC 1220 may periodically or continuously transmit/receive a certain signal (e.g., a filler). Accordingly, as the high-speed mode is maintained, the power consumption or power loss may occur.

In some implementations, the UFS device 1200 may actively or autonomously control the power mode of the transmission channel TX_CH or the reception channel RX_CH depending on an internal operation status of the UFS device 1200. For example, the UFS device controller 1210 may include a device monitoring circuit 1211. The device monitoring circuit 1211 may be configured to detect the internal operation mode of the UFS device 1200. When a certain operation state is detected by the device monitoring circuit 1211, the UFS device controller 1210 may be configured to change the power mode of the transmission channel TX_CH or the reception channel RX_CH between the UFS device UIC 1220 and the UFS host UIC 1120. In this case, between the power mode of the transmission channel TX_CH or the reception channel RX_CH between the UFS device UIC 1220 and the UFS host UIC 1120 is actively changed depending on an internal situation of the UFS device 1200, the high-speed mode may not be unnecessarily maintained, and thus, the unnecessary power consumption may be reduced. An operation in which the UFS system 1000 changes the power mode will be described in detail with reference to the following drawings.

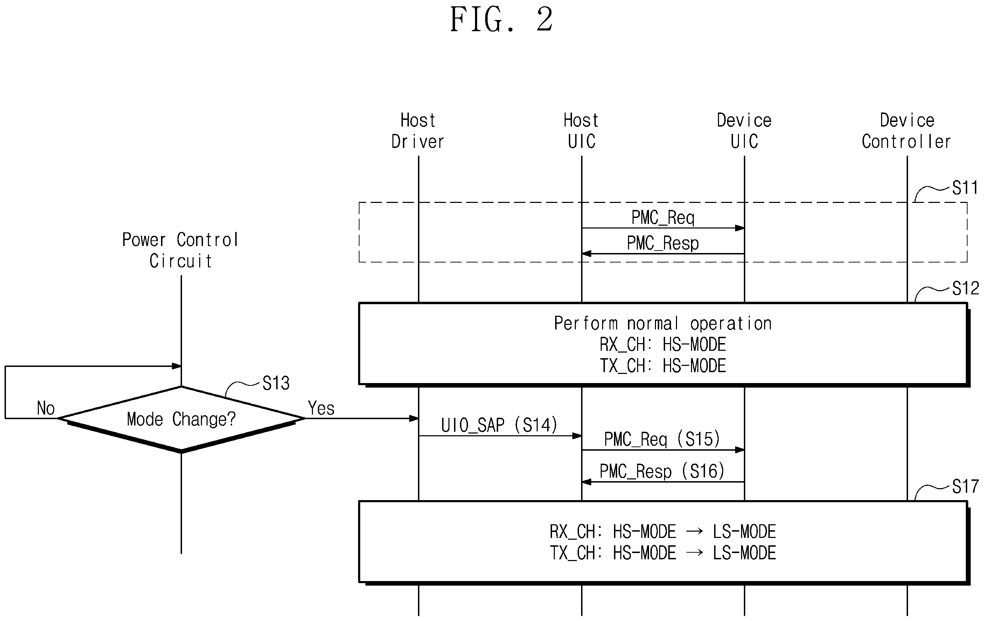

FIG. 2 is a flowchart of an example of an operation of a UFS system of FIG. 1. Referring to FIGS. 1 and 2, in operation S11, the UFS host 1100 and the UFS device 1200 performs an initialization operation. In some implementations, in the initialization operation, the UFS host 1100 and the UFS device 1200 may perform various operations for driving the UFS system 1000. As an example, the UFS host UIC 1120 and the UFS device UIC 1220 may set the power mode through the linkup operation. For example, the UFS host UIC 1120 may transmit a power mode change request PMC_Req to the UFS device UIC 1220. The UFS device UIC 1220 may set the corresponding power mode in response to the power mode change request PMC_Req. After the power mode is set, the UFS device UIC 1220 may transmit a power mode change response PMC_Resp to the UFS host UIC 1120.

In operation S12, the UFS host 1100 and the UFS device 1200 performs a normal operation based on the set power mode. For example, through the initialization in operation S11, each of the reception channel RX_CH and the transmission channel TX_CH may be set to the high-speed mode HS-MODE. In this case, the UFS host UIC 1120 and the UFS device UIC 1220 may exchange signals or information based on the high-speed mode HS-MODE, and the UFS host 1100 and the UFS device 1200 may perform various relevant operations based on the exchanged signals or information.

In operation S13, the power control circuit 1130 of the UFS host 1100 determines whether a change of the operation mode is required. For example, the power control circuit 1130 may be configured to control or manage a power state (e.g., power-on, power-down, or sleep) of the UFS host 1100.

When it is determined by the management operation of the power control circuit 1130 that the change of the operation mode is required, in operation S14, the UFS host driver 1110 transmits a service access point UIO_SAP (UIC IO control Service Access Point) for a power mode change to the UFS host UIC 1120. The service access point UIO_SAP may be a service access point that is provided to an upper layer for the control of the UIC. In some implementations, the service access point UIO_SAP in operation S13 may be "DME_POWERMODE.req" which is a DME (Device Management Entity) service access point (DME service primitive) provided to change the power mode of each channel.

In operation S15, the UFS host UIC 1120 transmits the power mode change request PMC_Req to the UFS device UIC 1220 in response to the service access point UIO_SAP. The UFS device UIC 1220 may change the power mode in response to the power mode change request PMC_Req. In operation S16, the UFS device UIC 1220 transmits the power mode change response PMC_Req to the UFS host UIC 1120.

In operation S17, the reception channel RX_CH and the transmission channel TX_CH between the UFS host UIC 1120 and the UFS device UIC 1220 change from the high-speed mode HS-MODE to the low-speed mode LS-MODE.

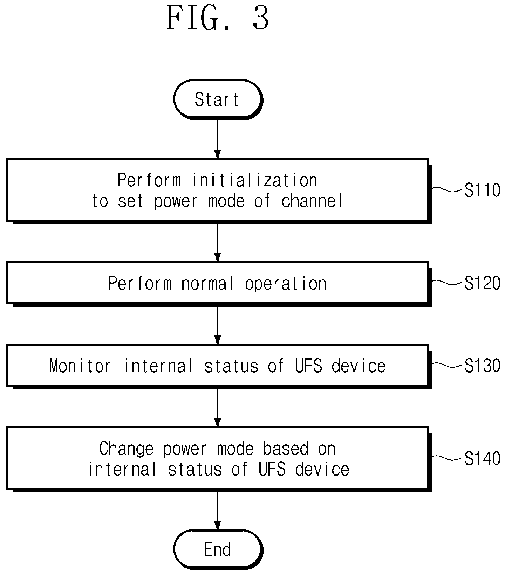

FIG. 3 is a flowchart of an example of an operation of a UFS device of FIG. 1. In the example described with reference to FIG. 2, the UFS host 1100 may change or control the power mode (or link speed) of the channels RX_CH and TX_CH between the UFS host UIC 1120 and the UFS device UIC 1220, based on the power state. However, the UFS host 1100 fails to recognize the internal operation status of the UFS device 1200 and does not support the power mode change according to the internal operation status of the UFS device 1200.

In contrast, in the example of FIG. 3, the UFS device 1200 may actively change or control the power mode (or link speed) of the channels RX_CH and TX_CH between the UFS host UIC 1120 and the UFS device UIC 1220, based on the internal operation situation.

Referring to FIGS. 1 and 3, in operation S110, the UFS device 1200 performs the initialization operation to set the power mode of the reception channel RX_CH and the transmission channel TX_CH. In some implementations, in the initialization operation, the power mode of each of the reception channel RX_CH and the transmission channel TX_CH may be set to the high-speed mode HS-MODE.

In operation S120, the UFS device 1200 performs the normal operation. For example, the UFS device 1200 may perform various operations under control of the UFS host 1100. Alternatively, the UFS device 1200 may perform various maintenance operations regardless of the control of the UFS host 1100. In some implementations, while operation S120 is performed, the high-speed mode HS-MODE of the reception channel RX_CH and the transmission channel TX_CH may be maintained.

In operation S130, the UFS device 1200 monitors an internal operation status of the UFS device 1200. For example, the device monitoring circuit 1211 of the UFS device controller 1210 may monitor the internal operation status of the UFS device 1200. In some implementations, the internal operation status may include various operation states such as an available state of a write buffer, a type or the number of pending commands, an operation state of the memory device 1230, whether a maintenance operation is performed, and a device temperature.

In operation S140, the UFS device 1200 changes or controls the power mode of the reception channel RX_CH or the transmission channel TX_CH, based on the internal operation status of the UFS device 1200. In some implementations, the power modes of the reception channel RX_CH and the transmission channel TX_CH may be changed or controlled independently, independently, or asymmetrically, depending on the internal operation status.

As described above, in some implementations, the UFS device 1200 may monitor the internal operation status and may change or control the power mode of each of the reception channel RX_CH and the transmission channel TX_CH, based on the internal operation state. In this case, because the high-speed mode HS-MODE of the reception channel RX_CH or the transmission channel TX_CH is not maintained, power consumption that is caused when the high-speed mode HS-MODE thereof is maintained may be reduced.

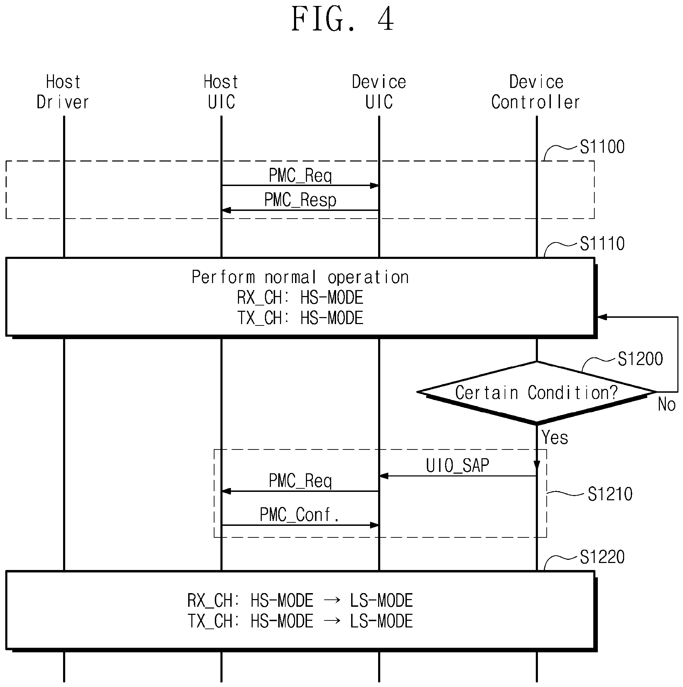

FIG. 4 is a flowchart of an example of an operation of a UFS system of FIG. 1. Referring to FIGS. 1 and 4, in operation S1100, the UFS host 1100 and the UFS device 1200 performs the initialization operation. In some implementations, through the initialization operation, the power mode of the channels RX_CH and TX_CH between the UFS host UIC 1120 and the UFS device UIC 1220 may be set through the initialization operation. Operation S1100 is similar to operation S11 of FIG. 2, and thus, additional description will be omitted to avoid redundancy.

In operation S1110, the UFS host 1100 and the UFS device 1200 may perform the normal operation based on the set power mode. For example, through the initialization in operation S1100, each of the reception channel RX_CH and the transmission channel TX_CH may be set to the high-speed mode HS-MODE. In this case, the UFS host UIC 1120 and the UFS device UIC 1220 may exchange signals or information based on the high-speed mode HS-MODE, and the UFS host 1100 and the UFS device 1200 may perform various relevant operations based on the exchanged signals or information.

In operation S1200, the UFS device 1200 determines whether a certain condition is satisfied. For example, the device monitoring circuit 1211 of the UFS device controller 1210 may monitor various internal operation statuses of the UFS device 1200. In this case, an internal operation status may satisfy the certain condition. As an example, the certain condition may include a state where an internal operation (e.g., a garbage collection operation) is performed, a state where a write buffer is full, a state where a transmission channel is idle, a state where a reception channel is idle, etc. However, the present disclosure is not limited thereto. For example, the certain condition associated with the internal operation status of the UFS device 1200 may be variously set or changed.

When the internal operation status does not satisfy the certain condition, the UFS host 1100 and the UFS device 1200 may continuously perform operation S1110.

When the internal operation status satisfies the certain condition, in operation S1210, the UFS device 1200 changes the power mode of the reception channel RX_CH or the transmission channel TX_CH. In some implementations, the change of the power mode of the reception channel RX_CH and the transmission channel TX_CH may be performed by controlling the physical layers (e.g., MIPI Unipro or MIPI M-PHY) included in the UFS host UIC 1120 and the UFS device UIC 1220. For example, the UFS device controller 1210 of the UFS device 1200 may transmit the service access point UIO_SAP for changing the power mode to the UFS device UIC 1220. In some implementations, the service access point UIO_SAP may be "DME_POWERMODE.req" for the power mode change.

In response to the service access point UIO_SAP, the UFS device UIC 1220 sets a parameter of the physical layer to a value corresponding to a target power mode (e.g., the low-speed mode LS-MODE). In some implementations, when the power mode of the reception channel RX_CH is changed, the UFS device UIC 1220 may change a parameter of a transmitter of the physical layer to a relevant value. In some implementations, when the power mode of the transmission channel TX_CH is changed, the UFS device UIC 1220 may change a parameter of a receiver of the physical layer to a relevant value.

The UFS device UIC 1220 may transmit the power mode change request PMC_Req to the UFS host UIC 1120. In response to the power mode change request PMC_Req, the UFS host UIC 1120 may set a parameter of the physical layer of the UFS host UIC 1120 to a value corresponding to a target power mode (e.g., the low-speed mode LS-MODE). In some implementations, when the power mode of the reception channel RX_CH is changed, the UFS host UIC 1120 may change a parameter of a receiver of the physical layer to a relevant value. When the power mode of the transmission channel TX_CH is changed, the UFS host UIC 1120 may change a parameter of a transmitter of the physical layer to a relevant value. Afterwards, the UFS host UIC 1120 may transmit a power mode change confirmation PMC_Conf. to the UFS device UIC 1220.

In operation S1220, the power mode of each of the channels RX_CH and TX_CH between the UFS host UIC 1120 and the UFS device UIC 1220 is changed from the high-speed mode HS-MODE to the low-speed mode LS-MODE. For example, through operation S1210, the parameter of the physical layer of each of the UFS host UIC 1120 and the UFS device UIC 1220 may be set to a value corresponding to a target power mode. Accordingly, the power mode of each of the channels RX_CH and TX_CH may be changed from the high-speed mode HS-MODE to the low-speed mode LS-MODE. In some implementations, the power mode of each of the reception channel RX_CH and the transmission channel TX_CH may be changed or controlled independently, independently, or asymmetrically.

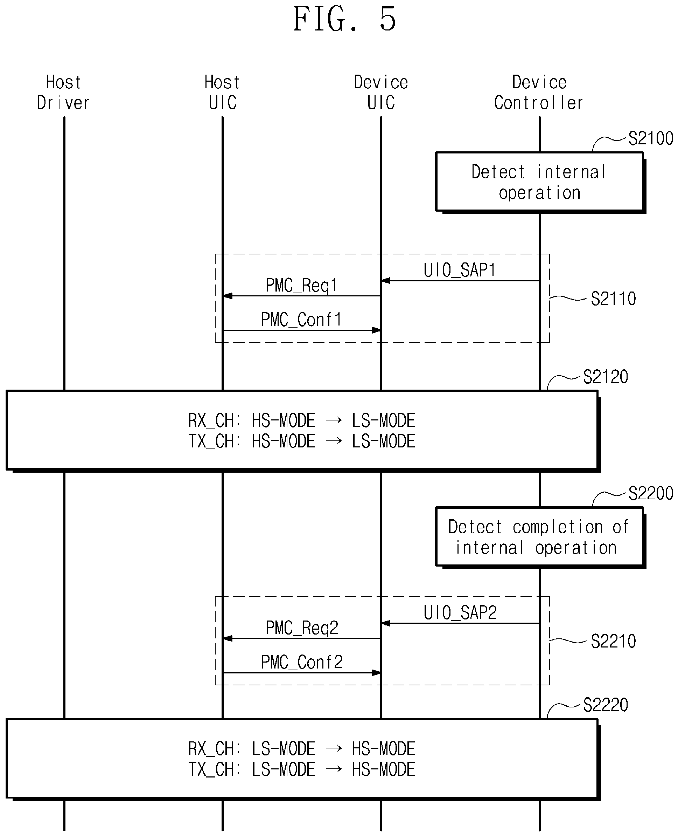

FIGS. 5 to 9 are flowcharts of examples of operation methods of a UFS system of FIG. 1. Examples where the power mode is changed depending on various internal operation statuses will be described with reference to the flowcharts of FIGS. 5 to 9. However, the present disclosure is not limited thereto. For example, the power mode of the reception channel RX_CH or the transmission channel TX_CH may be variously changed depending on various internal operation statuses.

Also, for convenience, examples where the power mode is changed from the high-speed mode HS-MODE to the low-speed mode LS-MODE or is changed from the low-speed mode LS-MODE to the high-speed mode HS-MODE will be described. However, the present disclosure is not limited thereto. For example, the changing of the power mode may include changing a GEAR of the reception channel RX_CH or the transmission channel TX_CH or may include changing the power mode to any other power mode (e.g., STALL, HS-BURST, PWM-MODE, HIBERN8, or SLEEP).

Also, in the examples of FIGS. 5 to 9, it is assumed that the UFS host 1100 and the UFS device 1200 are in a state where the initialization operation is completed and the power mode of each of the reception channel RX_CH and the transmission channel TX_CH is the high-speed mode HS-MODE. The above descriptions are provided for describing examples of the present disclosure clearly, and it may be understood by one skilled in the art that the present disclosure is not strictly limited thereto.

First, an example in which the power mode is changed when the internal operation of the UFS device 1200 is performed will be described with reference to FIGS. 1 and 5. Referring to FIGS. 1 and 5, in operation S2100, the UFS device controller 1210 detects the internal operation. In some implementations, to efficiently use the memory device 1230, the UFS device controller 1210 may perform various maintenance operations. As an example, the UFS device controller 1210 may perform garbage collection for the memory device 1230. The device monitoring circuit 1211 may detect that the UFS device 1200 performs garbage collection.

In operation S2110, the UFS device 1200 changes the power mode of the reception channel RX_CH and the transmission channel TX_CH to the low-speed mode LS-MODE in response to the internal operation being detected. For example, the UFS device controller 1210 may transmit a first service access point UIO_SAP1 for changing the power mode of the reception channel RX_CH and the transmission channel TX_CH to the UFS device UIC 1220. In response to the first service access point UIO_SAP1, the UFS device UIC 1220 may set parameters of the physical layer to a value corresponding to the low-speed mode LS-MODE. The UFS device UIC 1220 may transmit a first power mode change request PMC_Req1 to the UFS host UIC 1120. In response to the first power mode change request PMC_Req1, the UFS host UIC 1120 may set parameters of the physical layer to a value corresponding to the low-speed mode LS-MODE. Afterwards, the UFS host UIC 1120 may transmit a first power mode change confirmation PMC_Conf1 to the UFS device UIC 1220.

In operation S2120, the power mode of the reception channel RX_CH and the transmission channel TX_CH is changed from the high-speed mode HS-MODE to the low-speed mode LS-MODE. For example, through operation S2110, the parameters of the physical layers of the UFS host UIC 1120 and the UFS device UIC 1220 may be set to a value corresponding to the low-speed mode LS-MODE. In this case, the power mode of the reception channel RX_CH and the transmission channel TX_CH between the UFS host UIC 1120 and the UFS device UIC 1220 may be changed to the low-speed mode LS-MODE.

In some implementations, when the UFS device 1200 performs the internal operation, the UFS device 1200 may not preferentially process a request from the UFS host 1100. Accordingly, even though the power mode of the reception channel RX_CH and the transmission channel TX_CH is changed to the low-speed mode LS-MODE, there may be no reduction of speed which is actually perceived. In addition, as the power mode of the reception channel RX_CH and the transmission channel TX_CH is changed to the low-speed mode LS-MODE, power consumption which is caused due to the high-speed mode HS-MODE may be reduced.

Afterwards, in operation S2200, the UFS device 1200 detects completion of the internal operation. For example, the UFS device controller 1210 may complete garbage collection for the memory device 1230. In this case, the UFS device 1200 may process an operation corresponding to the request of the UFS host 1100.

In operation S2210, the UFS device 1200 changes the power mode of the reception channel RX_CH and the transmission channel TX_CH (e.g., from the low-speed mode LS-MODE to the high-speed mode HS-MODE). For example, the UFS device controller 1210 may transmit a second service access point UIO_SAP2 for changing the power mode of the reception channel RX_CH and the transmission channel TX_CH to the UFS device UIC 1220. In response to the second service access point UIO_SAP2, the UFS device UIC 1220 may set the parameters of the physical layer to a value corresponding to the high-speed mode HS-MODE. The UFS device UIC 1220 may transmit a second power mode change request PMC_Req2 to the UFS host UIC 1120. In response to the second power mode change request PMC _Req2, the UFS host UIC 1120 may set the parameters of the physical layer to a value corresponding to the high-speed mode HS-MODE. Afterwards, the UFS host UIC 1120 may transmit a second power mode change confirmation PMC_Conf2 to the UFS device UIC 1220.

In operation S2220, the power mode of the reception channel RX_CH and the transmission channel TX_CH is changed from the low-speed mode LS-MODE to the high-speed mode HS-MODE. Afterwards, the UFS host 1100 and the UFS device 1200 may perform the normal operation. In some implementations, when the UFS device 1200 completes the internal operation, the UFS device 1200 may process the operation corresponding to the request of the UFS host 1100. Accordingly, because the power mode of the reception channel RX_CH and the transmission channel TX_CH is changed to the high-speed mode HS-MODE, a fast operation speed of the UFS system 1000 may be guaranteed.

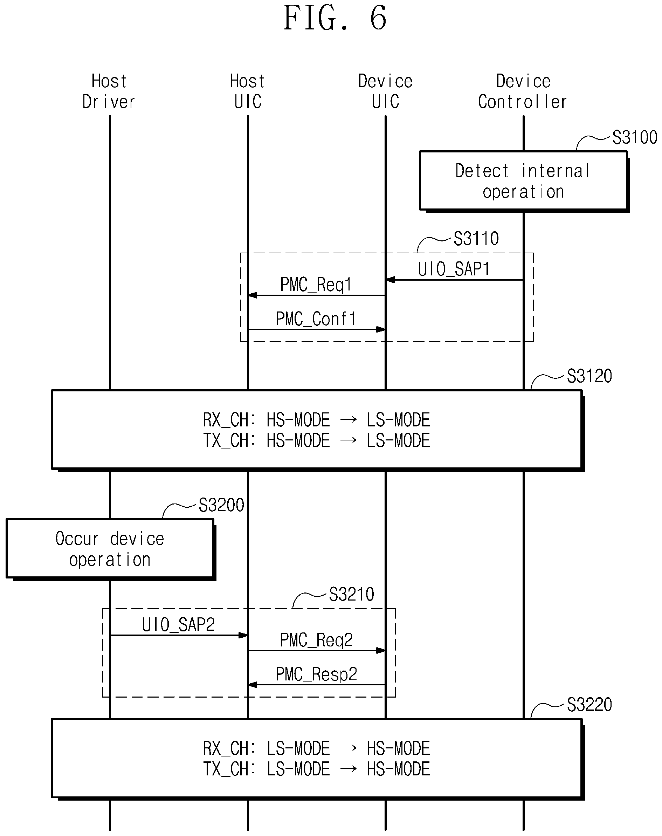

Next, an example in which the power mode is changed when the internal operation of the UFS device 1200 is performed will be described with reference to FIGS. 1 and 6. Referring to FIGS. 1 and 6, the UFS device 1200 and the UFS host 1100 may perform operation S3100, operation S3110, and operation S3120. Operation S3100, operation S3110, and operation S3120 of FIG. 6 are similar to operation S2100, operation S2110, and operation S2120 of FIG. 5, and thus, additional description will be omitted to avoid redundancy.

In operation S3200, the UFS host driver 1110 detects the occurrence of a device operation. For example, the UFS host driver 1110 may control the UFS device 1200 depending on a request of an application of the UFS host 1100. In this case, the device operation of the UFS device 1200 may be required depending on the request of the application of the UFS host 1100. In this case, the UFS host driver 1110 may detect the occurrence of the device operation associated with the UFS device 1200.

In operation S3210, the UFS host 1100 changes the power mode of the reception channel RX_CH and transmission channel TX_CH in response to the occurrence of the device operation. For example, by operation S3110 and operation S3120, the power mode of the reception channel RX_CH and the transmission channel TX_CH may be in a state of being set to the low-speed mode LS-MODE. In this case, the reduction of performance of the UFS system 1000 may occur. Accordingly, to guarantee the high-speed operation of the UFS system 1000, the UFS host 1100 may change the power mode of each of the channels RX_CH and TX_CH to the high-speed mode HS-MODE.

The UFS host driver 1110 may transmit the second service access point UIO_SAP2 to the UFS host UIC 1120. In response to the second service access point UIO_SAP2, the UFS host UIC 1120 may set the parameters of the physical layer to a value corresponding to the high-speed mode HS-MODE. The UFS host UIC 1120 may transmit the second power mode change request PMC_Req2 to the UFS device UIC 1220. In response to the second power mode change request PMC_Req2, the UFS device UIC 1220 may set the parameters of the physical layer to a value corresponding to the high-speed mode HS-MODE. Afterwards, the UFS device UIC 1220 may transmit a second power mode change response PMC_Resp2 to the UFS host UIC 1120.

In operation S3220, the power mode of the reception channel RX_CH and the transmission channel TX_CH is changed from the low-speed mode LS-MODE to the high-speed mode HS-MODE. Afterwards, the UFS host 1100 may perform the corresponding device operation. For example, the UFS host 1100 may transmit a command UFS protocol information unit (UPIU) including a command corresponding to the device operation to the UFS device 1200 through the transmission channel TX_CH set to the high-speed mode HS-MODE. The UFS device 1200 may perform the device operation corresponding to the command included in the command UPIU.

As described above, while the UFS device 1200 performs the internal operation, the UFS device 1200 may change the power mode of the reception channel RX_CH or the transmission channel TX_CH to the low-speed mode LS-MODE. In this case, because the high-speed mode HS-MODE of the reception channel RX_CH or the transmission channel TX_CH is not maintained, power consumption may be reduced. In some implementations, when the internal operation of the UFS device 1200 is completed, the UFS device 1200 may again change the power mode of the reception channel RX_CH or the transmission channel TX_CH to the high-speed mode HS-MODE. Alternatively, when the device operation is required by the UFS host 1100, the UFS host 1100 may again change the power mode of the reception channel RX_CH or the transmission channel TX_CH to the high-speed mode HS-MODE. Accordingly, the actual reduction of performance of the UFS system 1000 may be prevented. In some implementations, the internal operation may include a maintenance operation (e.g., garbage collection), which is performed by the UFS device controller 1210 of the UFS device 1200. Alternatively, the internal operation may include an operation in which all the channels of the memory device 1230 of the UFS device 1200 perform the program operation. That is, the UFS device 1200 may be incapable of simultaneously processing the internal operation, which is an operation performed within the UFS device 1200, and processing the request of the UFS host 1100. Accordingly, while the UFS device 1200 performs the internal operation, the UFS device 1200 may actively change the power mode of the reception channel RX_CH or the transmission channel TX_CH to the low-speed mode LS-MODE. Accordingly, power consumption caused by the high-speed mode HS-MODE may be reduced.

An example in which the power mode of the reception channel RX_CH and the transmission channel TX_CH is changed from the high-speed mode HS-MODE or the low-speed mode LS-MODE to the low-speed mode LS-MODE or the high-speed mode HS-MODE is described, but the present disclosure is not limited thereto. For example, the UFS device 1200 may change the power mode of only one of the reception channel RX_CH and the transmission channel TX_CH. For example, when the UFS device 1200 performs the internal operation, the UFS device 1200 may change the power mode of only the reception channel RX_CH to the low-speed mode LS-MODE. In this case, because the high-speed mode HS-MODE of the transmission channel TX_CH is maintained, information, a signal, or an UPIU may be received from the UFS host 1100 at high speed.

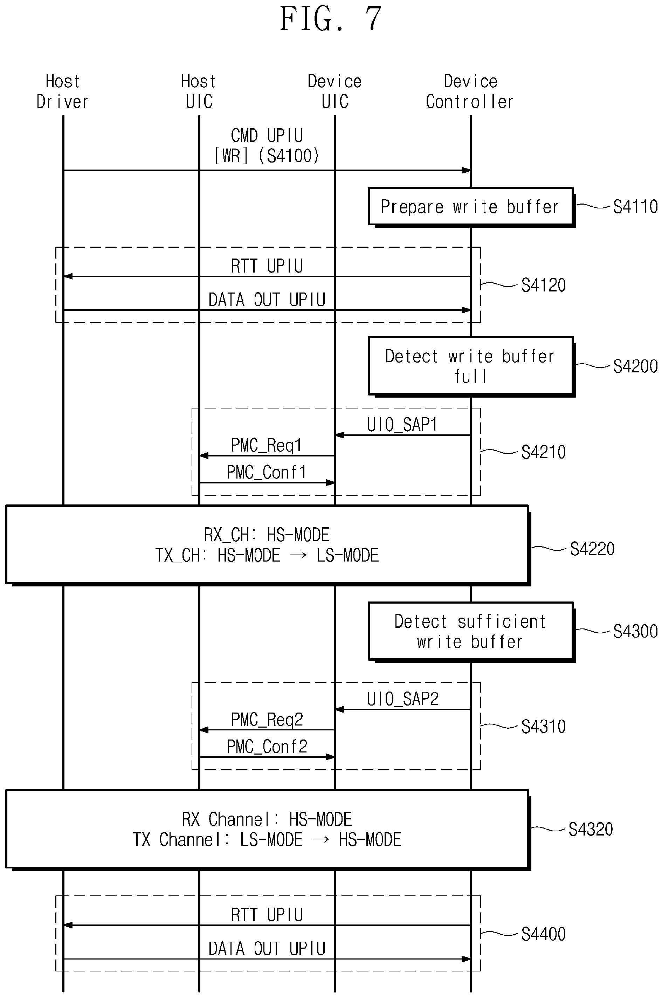

Next, an example in which the power mode is changed when the write operation of the UFS device 1200 is performed will be described with reference to FIGS. 1 and 7. Referring to FIGS. 1 and 7, the UFS host 1100 may perform the write operation for the UFS device 1200.

In operation S4100, the UFS host 1100 may transmit a command UPIU including a write command WR to the UFS device 1200. For example, the UFS host driver 1110 of the UFS host 1100 may generate the command UPIU including the write command WR. The command UPIU may be transmitted to the UFS device 1200 through the physical layer of the UFS host UIC 1120. The UFS device controller 1210 of the UFS device 1200 may receive the command UPIU through the physical layer of the UFS device UIC 1220. The UFS device controller 1210 may identify the write command WR included in the command UPIU.

In operation S4110, the UFS device 1200 prepares the write buffer in response to the write command WR. For example, the UFS device 1200 may include the write buffer configured to temporarily store write data received from the UFS host 1100. The write buffer may be a SRAM or a DRAM.

When the write buffer is prepared, in operation S4120, the UFS device 1200 receives the write data from the UFS host 1100. For example, the UFS device controller 1210 may generate a Ready to Transfer UPIU (RTT UPIU) providing notification that write data are ready to be received. The RTT UPIU may be transmitted to the UFS host 1100 through the UFS device UIC 1220. The UFS host driver 1110 may receive the RTT UPIU through the UFS host UIC 1120. The UFS host 1100 may generate the DATA OUT UPIU including the write data in response to the RTT UPIU. The DATA OUT UPIU may be transmitted to the UFS device 1200 through the UFS host UIC 1120. The UFS device controller 1210 may receive the DATA OUT UPIU through the UFS device UIC 1220. The UFS device controller 1210 may store the write data included in the DATA OUT UPIU in the write buffer.

In operation S4200, the UFS device 1200 detects a "write buffer full." For example, the UFS device 1200 may program the write data stored in the write buffer in the memory device 1230, based on a given size. A region of the write buffer, which corresponds to the write buffer programmed in the memory device 1230, may be released. In some implementations, an available write buffer may be secured through the above program operation. When the available write buffer is secured, the UFS host 1100 may again perform operation S4120. Through the above operation, the UFS device 1200 may receive the write data from the UFS host 1100 and may program the received write data in the memory device 1230.

In this case, when the write buffer is full (i.e., in the case of the "write buffer full"), until the available write buffer is secured, the UFS device 1200 may be incapable of receiving the DATA OUT UPIU (or write data) from the UFS host 1100. That is, in the case of the "write buffer full," a valid signal or information may not be transmitted/received through the transmission channel TX_CH.

In operation S4210, the UFS device 1200 changes the power mode of the transmission channel TX_CH in response to the write buffer being full. For example, as described above, when the write buffer is full, a valid signal or information is not transmitted/received through the transmission channel TX_CH. In this case, even though the UFS device 1200 changes the power mode of the transmission channel TX_CH from the high-speed mode HS-MODE to the low-speed mode LS-MODE, the actual reduction of performance does not occur.

The UFS device controller 1210 may transmit the first service access point UIO_SAP1 to the UFS device UIC 1220. In response to the first service access point UIO_SAP1, the UFS device UIC 1220 may set the parameters of the receiver of the physical layer to a value corresponding to the low-speed mode LS-MODE. The UFS device UIC 1220 may transmit the first power mode change request PMC_Req1 to the UFS host UIC 1120. In response to the first power mode change request PMC_Req1, the UFS host UIC 1120 may set the parameters of the transmitter of the physical layer to a value corresponding to the low-speed mode LS-MODE and may transmit the first power mode change confirmation PMC_Conf1 to the UFS device UIC 1220.

In operation S4220, the power mode of the transmission channel TX_CH is changed from the high-speed mode HS-MODE to the low-speed mode LS-MODE. For example, through operation S4210, the parameters of the receiver of the physical layer of the UFS device UIC 1220 and the transmitter of the physical layer of the UFS host UIC 1120 may be set to a value corresponding to the low-speed mode LS-MODE; in this case, the power mode of the transmission channel TX_CH implemented through the receiver of the physical layer of the UFS device UIC 1220 and the transmitter of the physical layer of the UFS host UIC 1120 may be changed to the low-speed mode LS-MODE.

That is, in a situation where the write buffer is full, the power mode of the transmission channel TX_CH may be changed to the low-speed mode LS-MODE, and thus, the power consumption by the transmission channel TX_CH may be reduced. In some implementations, while the low-speed mode LS-MODE of the transmission channel TX_CH is maintained, the UFS device 1200 may program the write data stored in the write buffer in the memory device 1230, and thus, the available write buffer may be secured.

In operation S4300, the UFS device 1200 detects a sufficient write buffer or an available write buffer. When the available write buffer is secured, the UFS device 1200 may further receive write data from the UFS host 1100. However, in operation S4220, because the power mode of the transmission channel TX_CH is changed to the low-speed mode LS-MODE, the power mode of the transmission channel TX_CH should be changed to transmit/receive write data normally.

In operation S4310, the UFS device 1200 changes the power mode of the transmission channel TX_CH to the high-speed mode HS-MODE in response to the available write buffer being secured. For example, the UFS device controller 1210 may transmit the second service access point UIO_SAP2 to the UFS device UIC 1220. In response to the second service access point UIO_SAP2, the UFS device UIC 1220 may set the parameters of the receiver of the physical layer to a value corresponding to the high-speed mode HS-MODE. The UFS device UIC 1220 may transmit the second power mode change request PMC_Req2 to the UFS host UIC 1120. In response to the second power mode change request PMC _Req2, the UFS host UIC 1120 may set the parameters of the transmitter of the physical layer to a value corresponding to the high-speed mode HS-MODE and may transmit the second power mode change confirmation PMC_Conf2 to the UFS device UIC 1220.

In operation S4320, the power mode of the transmission channel TX_CH is changed from the low-speed mode LS-MODE to the high-speed mode HS-MODE.

In operation S4400, the UFS device 1200 receives the write data from the UFS host 1100. For example, the UFS device 1200 may transmit the RTT UPIU to the UFS host 1100. The UFS host 1100 may transmit the DATA OUT UPIU, in which the write data are included, to the UFS device 1200 in response to the RTT UPIU. Operation S4400 is similar to operation S4120, and thus, additional description will be omitted to avoid redundancy.

As described above, in the write operation of the UFS device 1200, the "write buffer full" may be detected. In this case, the UFS device 1200 may be incapable of receiving the write data from the UFS host 1100. Accordingly, the UFS device 1200 may change the power mode of the transmission channel TX_CH from the high-speed mode HS-MODE to the low-speed mode LS-MODE. Afterwards, when an available write buffer is secured, the UFS device 1200 may change the power mode of the transmission channel TX_CH from the low-speed mode LS-MODE to the high-speed mode HS-MODE. Accordingly, in a time interval where the transmission channel TX_CH is not used depending on the operation status of the UFS device 1200, the power mode of the transmission channel TX_CH may be changed to the low-speed mode LS-MODE, and thus, power consumption may be reduced.

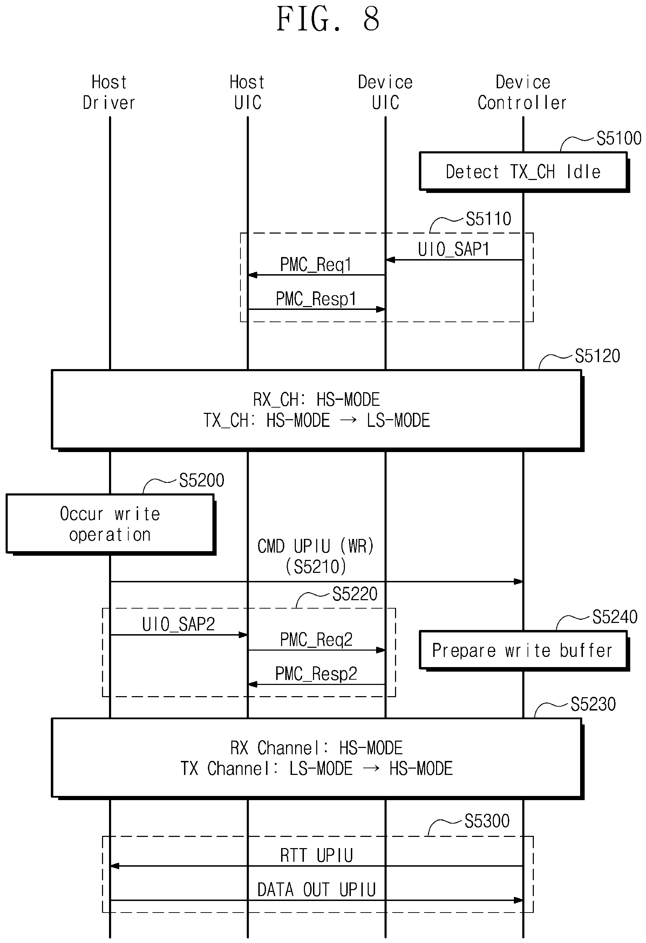

Next, an example in which the power mode is changed when the transmission channel TX_CH is in an idle state will be described with reference to FIGS. 1 and 8. Referring to FIGS. 1 and 8, in operation S5100, the UFS device 1200 detects the idle state of the transmission channel TX_CH. In some implementations, the idle state of the transmission channel TX_CH may be detected through the device monitoring circuit 1211. For example, the device monitoring circuit 1211 of the UFS device controller 1210 may detect a state where there is no pending write command or a state where a command received from the UFS host 1100 does not exist. In this case, information, a signal, or write data exchanged through the transmission channel TX_CH may not exist, which may mean the idle state of the transmission channel TX_CH.

In operation S5110, the UFS device 1200 changes the power mode of the transmission channel TX_CH in response to the idle state of the transmission channel TX_CH. In operation S5120, the power mode of the transmission channel TX_CH is changed from high-speed mode HS-MODE to the low-speed mode LS-MODE. Operation S5110 and operation S5120 (e.g., the operation of changing the power mode of the transmission channel TX_CH) are similar to operation S4210 and operation S4220 of FIG. 7, and thus, additional description will be omitted to avoid redundancy.

That is, the UFS device 1200 may detect the idle state of the transmission channel TX_CH and may change the power mode of the transmission channel TX_CH to the low-speed mode LS-MODE in response to the idle state of the transmission channel TX_CH thus detected. In this case, signals may be prevented from being unnecessarily exchanged in the high-speed mode HS-MODE, and thus, power consumption may be reduced.

Afterwards, in operation S5200, the UFS host 1100 performs the write operation for the UFS device 1200. For example, an application layer or any other layer of the UFS host 1100 may require the write operation of the UFS device 1200. In this case, the UFS host driver 1110 may control the write operation associated with the UFS device 1200.

For the write operation associated with the UFS device 1200, in operation S5210, the UFS host 1100 transmits the command UPIU including the write command WR to the UFS device 1200. Operation S5210 is similar to operation S4100 of FIG. 7, and thus, additional description will be omitted to avoid redundancy.

In operation S5220, the UFS host 1100 may change the power mode of the transmission channel TX_CH in response to the write command WR being issued. For example, in the write operation, the UFS host 1100 may transmit the write data to the UFS device 1200 through the transmission channel TX_CH. However, the transmission channel TX_CH may be in a state of being changed to the low-speed mode LS-MODE by the UFS device 1200. In this case, the transmission speed of the write data may be lowered. Accordingly, to improve the transmission speed of the write data, the UFS host 1100 may change the power mode of the transmission channel TX_CH from the low-speed mode LS-MODE to the high-speed mode HS-MODE. In some implementations, operation S5220 is similar to operation S3210 of FIG. 6 except that the power mode of the transmission channel TX_CH is changed from the low-speed mode LS-MODE to the high-speed mode HS-MODE, and thus, additional description will be omitted to avoid redundancy.

In operation S5230, the power mode of the transmission channel TX_CH is changed from the low-speed mode LS-MODE to the high-speed mode HS-MODE.

In operation S5240, the UFS device 1200 prepares the write buffer in response to the command UPIU where the write command WR is included. In some implementations, operation S5240 is similar to operation S4110 of FIG. 7, and thus, additional description will be omitted to avoid redundancy.

In some implementations, while the UFS device 1200 performs operation S5240, that is, prepares the write buffer, the UFS host 1100 may perform operation S5220 and operation S5230, that is, the operation of changing the power mode of the transmission channel TX_CH.

In operation S5300, the UFS device 1200 receives the write data from the UFS host 1100. For example, the UFS device 1200 may transmit the RTT UPIU to the UFS host 1100, and the UFS host 1100 may transmit the DATA OUT UPIU including the write data to the UFS device 1200 in response to the RTT UPIU. Operation S5300 is similar to operation S4120 or operation S4400 of FIG. 7, and thus, additional description will be omitted to avoid redundancy. In some implementations, when operation S5300 is performed, because the power mode of the transmission channel TX_CH is in a state of being changed to the high-speed mode HS-MODE, the write data may be transmitted at high speed.

An example in which the UFS device 1200 transmits the command UPIU including the write command WR to the UFS device 1200 and then changes the power mode of the transmission channel TX_CH is described with reference to FIG. 8, but the present disclosure is not limited thereto. For example, the UFS host 1100 may detect the occurrence of the write operation. In this case, in response to detecting the occurrence of the write operation, the UFS host 1100 may first change the power mode of the transmission channel TX_CH (e.g., to the high-speed mode HS-MODE) and may then transmit the command UPIU including the write command WR to the UFS device 1200.

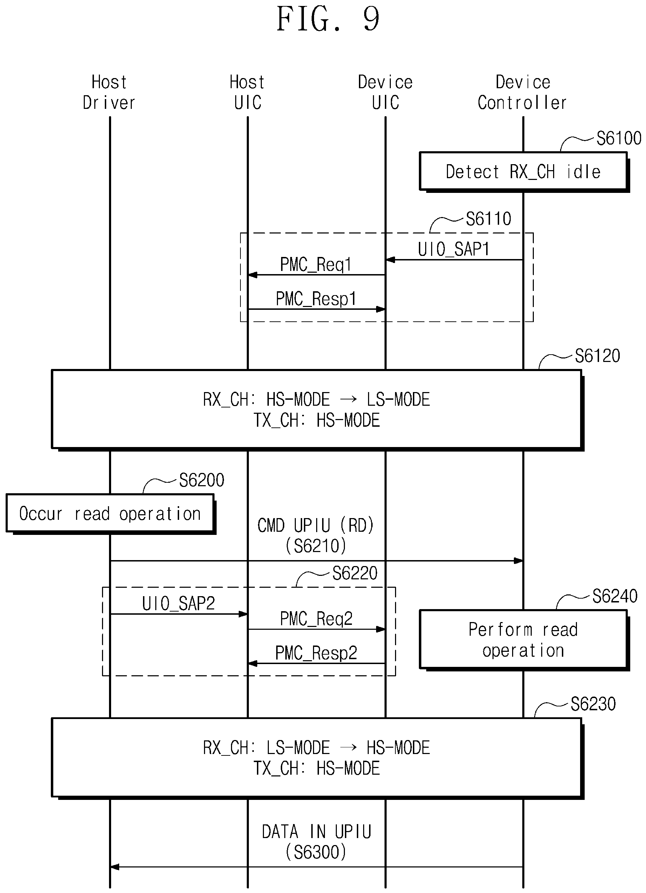

Then, an example in which the power mode is changed when the reception channel RX_CH is in an idle state will be described with reference to FIGS. 1 and 9. Referring to FIGS. 1 and 9, in operation S6100, the UFS device 1200 detects the idle state of the reception channel RX_CH. In some implementations, the idle state of the reception channel RX_CH may be detected through the device monitoring circuit 1211. For example, the device monitoring circuit 1211 of the UFS device controller 1210 may detect a state where there is no pending write command, a state where a command received from the UFS host 1100 does not exist, or a state where the read operation of the memory device 1230 is not performed. In this case, information, a signal, or read data exchanged through the reception channel RX_CH may not exist, which may mean the idle state of the reception channel RX_CH.

In operation S6110, the UFS device 1200 changes the power mode of reception channel RX_CH in response to the idle state of the reception channel RX_CH. For example, the UFS device controller 1210 may transmit the first service access point UIO_SAP1 to the UFS device UIC 1220. In response to the first service access point UIO_SAP1, the UFS device UIC 1220 may set the parameters of the transmitter of the physical layer to a value corresponding to the low-speed mode LS-MODE. The UFS device UIC 1220 may transmit the first power mode change request PMC_Req1 to the UFS host UIC 1120. The UFS host UIC 1120 may set the parameters of the receiver of the physical layer to a value corresponding to the low-speed mode LS-MODE and may transmit the first power mode change response PMC_Resp1 to the UFS device UIC 1220.

In operation S6120, the power mode of the reception channel RX_CH is changed from high-speed mode HS-MODE to the low-speed mode LS-MODE. In some implementations, because the reception channel RX_CH is in an idle state, even though the power mode of the reception channel RX_CH is changed to the low-speed mode LS-MODE, the actual reduction of performance may not occur. Also, as the power mode of the reception channel RX_CH is changed to the low-speed mode LS-MODE, power consumption is reduced.

In operation S6200, the UFS host 1100 performs the read operation on the UFS device 1200. For example, an application layer or any other layer of the UFS host 1100 may require the read operation of the UFS device 1200. In this case, the UFS host driver 1110 may control the read operation associated with the UFS device 1200.

For the read operation associated with the UFS device 1200, in operation S6210, the UFS host 1100 transmits the command UPIU including a read command RD to the UFS device 1200. For example, the UFS host driver 1110 may generate the command UPIU including the read command RD. The command UPIU may be transmitted to the UFS device 1200 through the physical layer of the UFS host UIC 1120. The UFS device controller 1210 of the UFS device 1200 may receive the command UPIU through the physical layer of the UFS device UIC 1220. The UFS device controller 1210 may identify the read command RD included in the command UPIU.

In operation S6220, the UFS host 1100 changes the power mode of the reception channel RX_CH. For example, as the read operation of the UFS device 1200 is performed, the UFS host 1100 may receive the DATA IN UPIU including the read data from the UFS device 1200 through the reception channel RX_CH. However, through operation S6120, because the power mode of the reception channel RX_CH is changed to the low-speed mode LS-MODE, the change of the power mode of the reception channel RX_CH is required for a high-speed operation.

The UFS host driver 1110 may transmit the second service access point UIO_SAP2 to the UFS host UIC 1120. In response to the second service access point UIO_SAP2, the UFS host UIC 1120 may set the parameters of the receiver of the physical layer to a value corresponding to the high-speed mode HS-MODE. The UFS host UIC 1120 may transmit the second power mode change request PMC_Req2 to the UFS device UIC 1220. In response to the second power mode change request PMC _Req2, the UFS device UIC 1220 may set the parameters of the transmitter of the physical layer to a value corresponding to the high-speed mode HS-MODE and may transmit the second power mode change response PMC_Resp2 to the UFS host UIC 1120.

In operation S6230, the power mode of the reception channel RX_CH is changed from the low-speed mode LS-MODE to the high-speed mode HS-MODE.

In operation S6240, the UFS device 1200 prepares the read operation in response to the read command RD. In some implementations, operation S6240 may be performed in parallel to operation S6220 and operation S6230 (e.g., the operation of changing the power mode of the reception channel RX_CH).

In operation S6300, the UFS device 1200 transmits the read data read through the read operation to the UFS device 1200. For example, the UFS device controller 1210 may generate the DATA IN UPIU including the read data. The UFS device controller 1210 may transmit the DATA IN UPIU to the UFS host 1100 through the UFS device UIC 1220. The UFS host driver 1110 may receive the DATA IN UPIU through the UFS host UIC 1120. The UFS host driver 1110 may identify the read data included in the DATA IN UPIU. In some implementations, because the power mode of the reception channel RX_CH is changed to the high-speed mode HS-MODE through operation S6220 and operation S6230, the UFS host 1100 may receive the DATA IN UPIU at high speed.

As described above, while the reception channel RX_CH is in an idle state, the UFS device 1200 may change the power mode of the reception channel RX_CH to the low-speed mode LS-MODE. Afterwards, the UFS host 1100 may perform the read operation; in this case, the UFS host 1100 may again change the power mode of the reception channel RX_CH to the high-speed mode HS-MODE. Accordingly, when the reception channel RX_CH is idle, the reception channel RX_CH may operate in the low-speed mode LS-MODE, and thus, power loss may be reduced. Also, when the read operation is performed by the UFS host 1100, as the reception channel RX_CH is changed to the high-speed mode HS-MODE, the UFS host 1100 may receive the DATA IN UPIU at high speed.

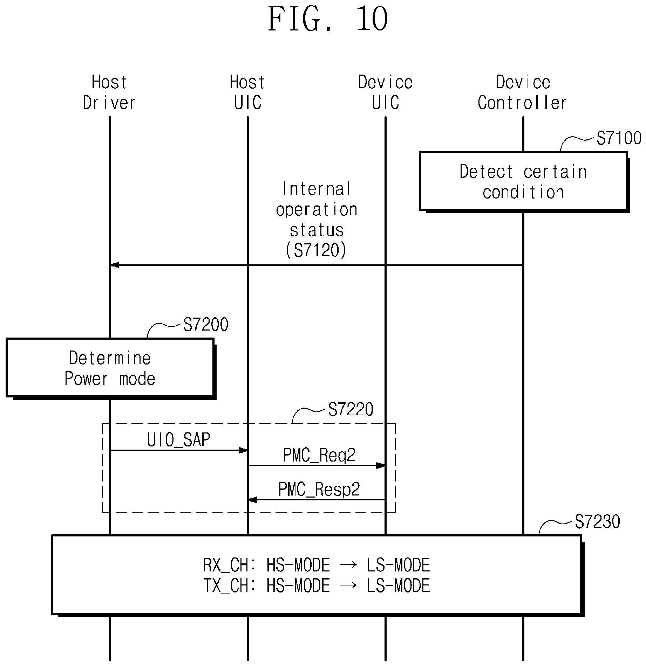

FIG. 10 is a flowchart of an example of an operation of a UFS system of FIG. 1. Referring to FIGS. 1 and 10, in operation S7100, the UFS device 1200 detects a certain condition. For example, the device monitoring circuit 1211 of the UFS device controller 1210 may detect the internal operation status of the UFS device 1200. In this case, the internal operation status may satisfy the certain condition. As an example, the certain condition may include a state where an internal operation (e.g., a garbage collection operation) is performed, a state where a write buffer is full, a state where a transmission channel is idle, a state where a reception channel is idle, etc. However, the present disclosure is not limited thereto. For example, the certain condition for the internal operation status of the UFS device 1200 may be variously set or changed.

In operation S7120, the UFS device 1200 transmits information about the internal operation status to the UFS host 1100. For example, the UFS device 1200 may perform various operations (e.g., a write operation and a read operation) depending on a request of the UFS host 1100. The UFS device 1200 may transmit a response UPIU to the UFS host 1100 as a result of various operations. The UFS device 1200 may include information about the internal operation status in the response UPIU. The UFS host 1100 may identify the internal operation status included in the response UPIU.

Alternatively, the UFS device 1200 may receive an explicit query request UPIU from the UFS host 1100. The UFS device 1200 may transmit the query response UPIU, in which the information about the internal operation status is included, to the UFS host 1100 in response to the query request UPIU. The UFS host 1100 may identify the information about the internal operation status included in the query response UPIU.

In operation S7200, the UFS host 1100 determines the power mode of each channel based on the information about the internal operation status. For example, when the information about the internal operation status indicates that the internal operation is being performed, the UFS host 1100 may determine the power mode of the reception channel RX_CH and the transmission channel TX_CH as the low-speed mode LS-MODE. Alternatively, when the information about the internal operation status indicates that the write buffer is full, the UFS host 1100 may determine the power mode of the transmission channel TX_CH as the low-speed mode LS-MODE. Alternatively, when the information about the internal operation status indicates that the reception channel RX_CH is in an idle state, the UFS host 1100 may determine the power mode of the reception channel RX_CH to the low-speed mode LS-MODE. The power mode of the reception channel RX_CH and the transmission channel TX_CH according to the above internal operation status is provided as an example, but the present disclosure is not limited thereto.

In operation S7220, the UFS host 1100 changes the power mode of the reception channel RX_CH or transmission channel TX_CH. In operation S7230, the power mode of the reception channel RX_CH and the transmission channel TX_CH is changed from the high-speed mode HS-MODE to the low-speed mode LS-MODE. Operation S7220 and operation S7230 are similar to operation S3210 and operation S3220 of FIG. 6, respectively, and thus, additional description will be omitted to avoid redundancy.

As described above, the UFS device 1200 may provide the internal operation status to the UFS host 1100. The UFS host 1100 may change or control the power mode of the reception channel RX_CH and the transmission channel TX_CH, based on the internal operation status of the UFS device 1200.

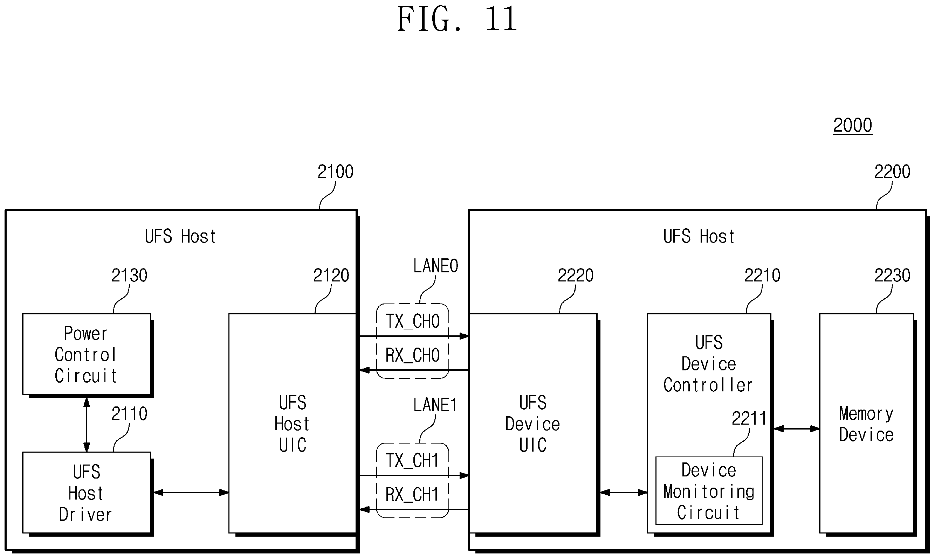

FIG. 11 is a block diagram of an example of a UFS system. Referring to FIG. 11, a UFS system 2000 includes a UFS host 2100 and a UFS device 2200. The UFS host 2100 may include a UFS host driver 2110, a UFS host UFS interconnect layer (UIC) 2120, and a power control circuit 2130. The UFS device 2200 may include a UFS device controller 2210, a UFS device UIC 2220, and a memory device 2230. The components of FIG. 11 are similar to those described with reference to FIG. 1, and thus, additional description will be omitted to avoid redundancy.

In some implementations, the UFS host UIC 2120 and the UFS device UIC 2220 may support a multi-lane. For example, the UFS host UIC 2120 and the UFS device UIC 2220 may communicate through a 0-th lane LANE0 and a first lane LANE1. The 0-th lane LANE0 may include a 0-th reception channel RX_CH0 and a 0-th transmission channel TX_CH0, and the first lane LANE1 may include a first reception channel RX_CH1 and a first transmission channel TX_CH1.

In some implementations, the UFS host UIC 2120 and the UFS device UIC 2220 may differently set the power mode for each lane or for each channel. In this case, the UFS device 2200 may change or control the power mode for each lane or for each channel, based on the internal operation status. The way to change the power mode depending on the internal operation status is similar to that described with reference to FIGS. 1 to 10, and thus, additional description will be omitted to avoid redundancy.

In some implementations, the UFS device 2200 may deactivate some lanes depending on the internal operation status. As some lanes are deactivated, power consumption may be reduced.

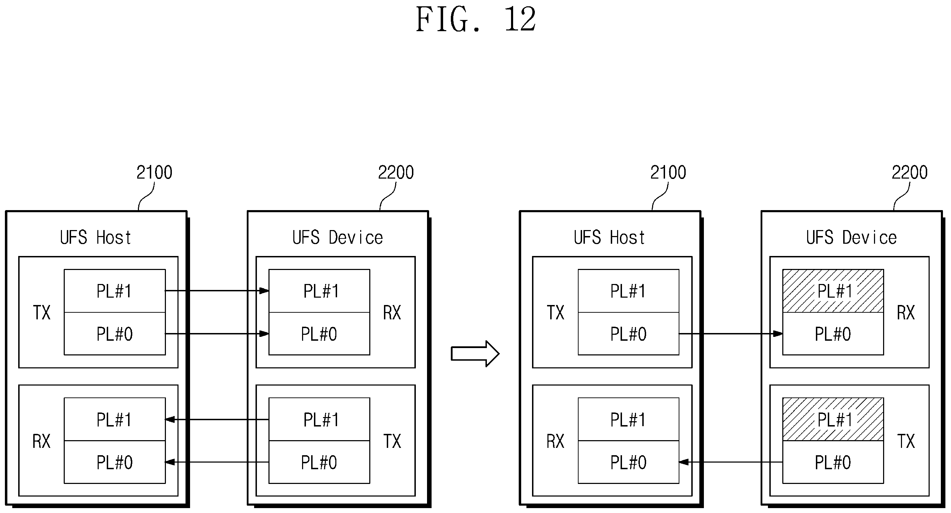

FIG. 12 is a diagram of an example of an operation of a UFS system of FIG. 11. Referring to FIGS. 11 and 12, the UFS host UIC 2120 of the UFS host 2100 includes a transmitter TX and a receiver RX. Each of the transmitter TX and the receiver RX of the UFS host UIC 2120 may be divided into a 0-th physical layer PL#0 and a first physical layer PL#1. The UFS device UIC 2220 of the UFS device 2200 may include a transmitter TX and a receiver RX. Each of the transmitter TX and the receiver RX of the UFS device UIC 2220 may be divided into a 0-th physical layer PL#0 and a first physical layer PL#1.

The zeroth, i.e., "0-th," and first physical layers PL#0 and PL#1 of the transmitter TX of the UFS device UIC 2220 may be respectively connected to the 0-th and first physical layers PL#0 and PL#1 of the receiver RX of the UFS device UIC 2220. The 0-th and first physical layers PL#0 and PL#1 of the transmitter TX of the UFS device UIC 2220 may be respectively connected to the 0-th and first physical layers PL#0 and PL#1 of the receiver RX of the UFS host UIC 2120.

The UFS device 2200 may deactivate some physical layers depending on the internal operation status of the UFS device 2200. For example, when the UFS device 2200 performs the internal operation (e.g., garbage collection), the UFS device 2200 may deactivate the first physical layer PL#1 of the receiver RX and the first physical layer PL#1 of the transmitter TX. In this case, the UFS host 2100 and the UFS device 2200 may communicate with each other through the 0-th physical layers PL#0. That is, the UFS host 2100 and the UFS device 2200 may communicate through a single lane (e.g., the 0-th lane LANE0). Accordingly, power consumption that is caused when the multi-lane is used may be reduced.

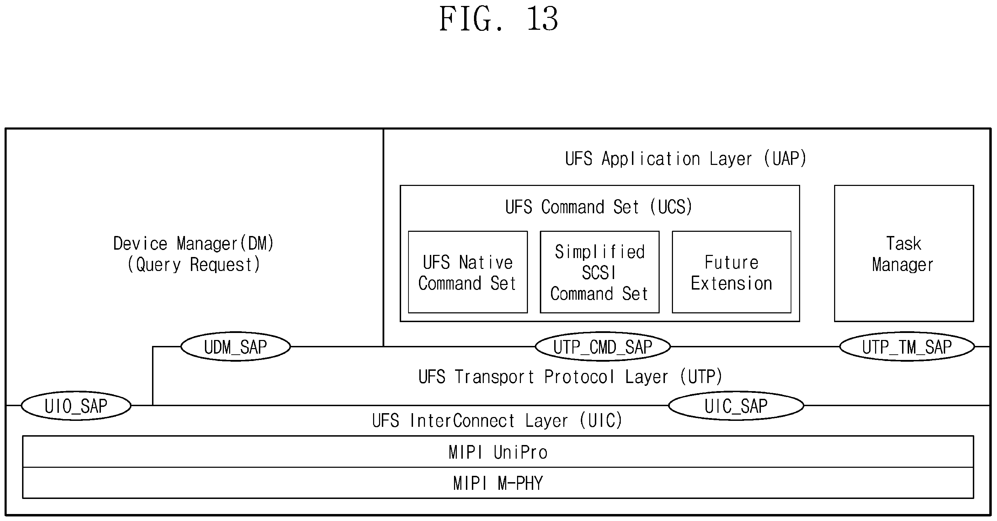

FIG. 13 is a diagram of an example of a hierarchical structure of a UFS device of a UFS system of FIG. 1. The hierarchical structure of the UFS device 1200 will be described with reference to FIG. 13, but the present disclosure is not limited thereto. A UFS host may also have a hierarchical structure similar to the hierarchical structure of FIG. 13.

Referring to FIGS. 1 and 13, the UFS device 1200 includes a UFS application layer UAP, a UFS transport protocol layer UTP, a UFS interconnect layer UIC, and a device manager DM.

The UFS application layer UAP may include various application programs, various processes, etc., that are driven in the UFS device 1200. The UFS application layer UAP is configured to support various commands between the UFS host 1100 and the UFS device 1200. For example, the UFS application layer UAP may include a UFS command set UCS. The UFS command set UCS may include a UFS native command set, a simplified SCSI command set, and a future extension command. The UFS application layer UAP may include a task manager configured to manage a command and a command queue control.

The device manager DM may manage operations of a device level and components of a device level. In some implementations, the device manager DM may manage a query request for setting or checking various information of the UFS device 1200. In some implementations, the device manager DM may generate and manage a service primitive (e.g., UIO_SAP) for changing the power mode of the reception channel RX_CH or the transmission channel TX_CH based on the internal operation status of the UFS device 1200.

The UFS transport protocol layer UTP may provide services for an upper layer. The UFS transport protocol layer UTP may generate a packet of the UPIU (UFS Protocol Information Unit) format based on the command or information provided from the UFS application layer UAP or the query request provided from the device manager DM. In some implementations, the UFS transport protocol layer UTP and the device manager DM may communicate with each other through the UDM-SAP (UDM-Service Access Point). The UFS transport protocol layer UTP and the UFS application layer UAP may communicate with each other through the UTP_CMD_SAP or UTP_TM_SAP.

The UFS interconnect layer UIC may manage a physical connection between the UFS host 1100 and the UFS device 1200. In some implementations, the UFS interconnect layer UIC may include physical layers or hardware components such as MIPI Unipro and MIPI M-PHY. In some implementations, the physical layers or hardware components of the UFS interconnect layer UIC of the UFS device 1200, such as MIPI Unipro and MIPI M-PHY, may be physically connected to the physical layers or hardware components of the UFS interconnect layer UIC of the UFS host 1100, such as MIPI Unipro and MIPI M-PHY.

The UFS interconnect layer UIC and the UFS transport protocol layer UTP may communicate through the UIC-SAP, and the UFS interconnect layer UIC and the device manager DM may communicate through the UIO-SAP.

In some implementations, the UFS interconnect layer UIC may change the power mode depending on the internal operation status of the UFS device 1200. In this case, the change of the power mode may be performed by the device manager DM of the UFS device 1200 or the device manager DM of the UFS host 1100. In some implementations, the device manager DM may change the power mode of the UFS interconnect layer UIC by using the UIO-SAP.

For example, the UFS application layer UAP of the UFS device 1200 may be configured to monitor the internal operation status of the UFS device 1200. In other words, the device monitoring circuit 1211 may be implemented with the UFS application layer UAP or by the UFS application layer UAP. When a certain condition (e.g., GC execution, an idle state of the transmission channel TX_CH, or an idle state of the reception channel RX_CH) is detected by the UFS application layer UAP, the UFS application layer UAP may provide information about the detection of the certain condition to the device manager DM. The device manager DM may perform the power mode change of the UFS interconnect layer UIC, based on the information about the detection of the certain condition. As an example, the device manager DM may control the power mode change of the UFS interconnect layer UIC by using the UIO-SAP. Alternatively, the device manager DM may transfer the information about the power mode change of the UFS interconnect layer UIC through the UDM-SAP to the UFS transport protocol layer UTP, and the UFS transport protocol layer UTP may transfer the information about the power mode change of the UFS interconnect layer UIC to the UFS interconnect layer UIC.

Alternatively, the UFS application layer UAP may determine the power mode of each channel of the UFS interconnect layer UIC, based on the information about the detection of the certain condition and may provide the information about the power mode change to the UFS transport protocol layer UTP through the UTP_TM_SAP. The UFS transport protocol layer UTP may transfer the information about the power mode change to the UFS interconnect layer UIC. Based on the information provided from the device manager DM, the UFS application layer UAP, or the UFS transport protocol layer UTP, the UFS interconnect layer UIC may perform the power mode change or may process a power mode change request.

In some implementations, the device manager DM or the UFS application layer UAP of the UFS host 1100 may control the power mode change of the UFS interconnect layer UIC. For example, the UFS application layer UAP may request an access to the UFS device 1200. In this case, the UFS application layer UAP may provide a command corresponding to the access to the UFS transport protocol layer UTP. Accordingly, the device manager DM may detect that the access request is issued and may change the power mode of the UFS interconnect layer UIC.

The above function and operation of each layer is provided as an example, and the present disclosure is not limited thereto.

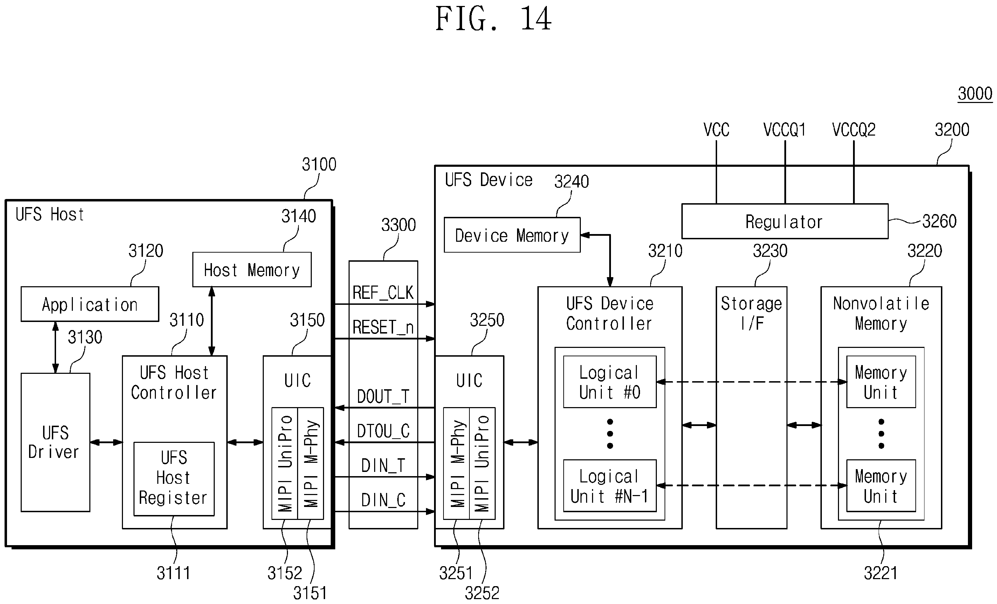

FIG. 14 is a diagram of an example of a UFS system 3000. The UFS system 3000 may be a system conforming to a UFS standard announced by Joint Electron Device Engineering Council (JEDEC) and include a UFS host 3100, a UFS device 3200, and a UFS interface 3300. The above description of the system 1000 of FIG. 1 may also be applied to the UFS system 3000 of FIG. 14 within a range that does not conflict with the following description of FIG. 14.

Referring to FIG. 14, the UFS host 3100 may be connected to the UFS device 3200 through the UFS interface 3300. When the main processor of FIG. 1 is an AP, the UFS host 3100 may be implemented as a portion of the AP.

The UFS host 3100 includes a UFS host controller 3110, an application 3120, a UFS driver 3130, a host memory 3140, and a UFS interconnect (UIC) layer 3150. The UFS device 3200 may include the UFS device controller 3210, the NVM 3220, a storage interface 3230, a device memory 3240, a UIC layer 3250, and a regulator 3260. The NVM 3220 may include a plurality of memory units 3221. Although each of the memory units 3221 may include a V-NAND flash memory having a 2D structure or a 3D structure, each of the memory units 3221 may include another kind of NVM, such as PRAM and/or RRAM. The UFS device controller 3210 may be connected to the NVM 3220 through the storage interface 3230. The storage interface 3230 may be configured to comply with a standard protocol, such as Toggle or ONFI.

The application 3120 may refer to a program that wants to communicate with the UFS device 3200 to use functions of the UFS device 3200. The application 3120 may transmit input-output requests (IORs) to the UFS driver 3130 for input/output (I/O) operations on the UFS device 3200. The IORs may refer to a data read request, a data storage (or write) request, and/or a data erase (or discard) request, without being limited thereto.

The UFS driver 3130 may manage the UFS host controller 3110 through a UFS-host controller interface (UFS-HCI). The UFS driver 3130 may convert the IOR generated by the application 3120 into a UFS command defined by the UFS standard and transmit the UFS command to the UFS host controller 3110. One IOR may be converted into a plurality of UFS commands. Although the UFS command may basically be defined by a SCSI standard, the UFS command may be a command dedicated to the UFS standard.

The UFS host controller 3110 may transmit the UFS command converted by the UFS driver 3130 to the UIC layer 3250 of the UFS device 3200 through the UIC layer 3150 and the UFS interface 3300. During the transmission of the UFS command, a UFS host register 3111 of the UFS host controller 3110 may serve as a command queue (CQ).

The UIC layer 3150 on the side of the UFS host 3100 may include a mobile industry processor interface (MIPI) M-PHY 3151 and an MIPI UniPro 3152, and the UIC layer 3250 on the side of the UFS device 3200 may also include an MIPI M-PHY 3251 and an MIPI UniPro 3252.

The UFS interface 3300 may include a line configured to transmit a reference clock signal REF_CLK, a line configured to transmit a hardware reset signal RESET_n for the UFS device 3200, a pair of lines configured to transmit a pair of differential input signals DIN_T and DIN_C, and a pair of lines configured to transmit a pair of differential output signals DOUT_T and DOUT_C.

A frequency of a reference clock signal REF_CLK provided from the UFS host 3100 to the UFS device 3200 may be one of 19.2MHz, 26MHz, 38.4MHz, and 52MHz, without being limited thereto. The UFS host 3100 may change the frequency of the reference clock signal REF_CLK during an operation, that is, during data transmission/receiving operations between the UFS host 3100 and the UFS device 3200. The UFS device 3200 may generate cock signals having various frequencies from the reference clock signal REF_CLK provided from the UFS host 3100, by using a phase-locked loop (PLL). Also, the UFS host 3100 may set a data rate between the UFS host 3100 and the UFS device 3200 by using the frequency of the reference clock signal REF_CLK. That is, the data rate may be determined depending on the frequency of the reference clock signal REF_CLK.

The UFS interface 3300 may support a plurality of lanes, each of which may be implemented as a pair of differential lines. For example, the UFS interface 3300 may include at least one receiving lane and at least one transmission lane. In FIG. 14, a pair of lines configured to transmit a pair of differential input signals DIN_T and DIN_C may constitute a receiving lane, and a pair of lines configured to transmit a pair of differential output signals DOUT_T and DOUT_C may constitute a transmission lane. Although one transmission lane and one receiving lane are illustrated in FIG. 14, the number of transmission lanes and the number of receiving lanes may be changed.

The receiving lane and the transmission lane may transmit data based on a serial communication scheme. Full-duplex communications between the UFS host 3100 and the UFS device 3200 may be enabled due to a structure in which the receiving lane is separated from the transmission lane. That is, while receiving data from the UFS host 3100 through the receiving lane, the UFS device 3200 may transmit data to the UFS host 3100 through the transmission lane. In addition, control data (e.g., a command) from the UFS host 3100 to the UFS device 3200 and user data to be stored in or read from the NVM 3220 of the UFS device 3200 by the UFS host 3100 may be transmitted through the same lane. Accordingly, between the UFS host 3100 and the UFS device 3200, there may be no need to further provide a separate lane for data transmission in addition to a pair of receiving lanes and a pair of transmission lanes.

The UFS device controller 3210 of the UFS device 3200 may control all operations of the UFS device 3200. The UFS device controller 3210 may manage the NVM 3220 by using a logical unit (LU) 3211, which is a logical data storage unit. The number of LUs 3211 may be 8, without being limited thereto. The UFS device controller 3210 may include a Flash Translation Layer (FTL) and convert a logical data address (e.g., a logical block address (LBA)) received from the UFS host 3100 into a physical data address (e.g., a physical block address (PBA)) by using address mapping information of the FTL. A logical block configured to store user data in the UFS system 3000 may have a size in a predetermined range. For example, a minimum size of the logical block may be set to 4 Kbyte.

When a command from the UFS host 3100 is applied through the UIC layer 3250 to the UFS device 3200, the UFS device controller 3210 may perform an operation in response to the command and transmit a completion response to the UFS host 3100 when the operation is completed.

As an example, when the UFS host 3100 intends to store user data in the UFS device 3200, the UFS host 3100 may transmit a data storage command to the UFS device 3200. When a response (a 'ready-to-transfer' response) indicating that the UFS host 3100 is ready to receive user data (ready-to-transfer) is received from the UFS device 3200, the UFS host 3100 may transmit user data to the UFS device 3200. The UFS device controller 3210 may temporarily store the received user data in the device memory 3240 and store the user data, which is temporarily stored in the device memory 3240, at a selected position of the NVM 3220 based on the address mapping information of the FTL.

As another example, when the UFS host 3100 intends to read the user data stored in the UFS device 3200, the UFS host 3100 may transmit a data read command to the UFS device 3200. The UFS device controller 3210, which has received the command, may read the user data from the NVM 3220 based on the data read command and temporarily store the read user data in the device memory 3240. During the read operation, the UFS device controller 3210 may detect and correct an error in the read user data by using an ECC engine embedded therein. More specifically, the ECC engine may generate parity bits for write data to be written to the NVM 3220, and the generated parity bits may be stored in the NVM 3220 along with the write data. During the reading of data from the NVM 3220, the ECC engine may correct an error in read data by using the parity bits read from the NVM 3220 along with the read data, and output error-corrected read data.

In addition, the UFS device controller 3210 may transmit user data, which is temporarily stored in the device memory 3240, to the UFS host 3100. In addition, the UFS device controller 3210 may further include an AES engine (not shown). The AES engine may perform at least one of an encryption operation and a decryption operation on data transmitted to the UFS device controller 3210 by using a symmetric-key algorithm.

The UFS host 3100 may sequentially store commands, which are to be transmitted to the UFS device 3200, in the UFS host register 3111, which may serve as a common queue, and sequentially transmit the commands to the UFS device 3200. In this case, even while a previously transmitted command is still being processed by the UFS device 3200, that is, even before receiving a notification that the previously transmitted command has been processed by the UFS device 3200, the UFS host 3100 may transmit a next command, which is on standby in the CQ, to the UFS device 3200. Thus, the UFS device 3200 may also receive a next command from the UFS host 3100 during the processing of the previously transmitted command. A maximum number (or queue depth) of commands that may be stored in the CQ may be, for example, 32. Also, the CQ may be implemented as a circular queue in which a start and an end of a command line stored in a queue are indicated by a head pointer and a tail pointer.

Each of the plurality of memory units 3221 may include a memory cell array and a control circuit configured to control an operation of the memory cell array. The memory cell array may include a 2D memory cell array or a 3D memory cell array. The memory cell array may include a plurality of memory cells. Although each of the memory cells is a single-level cell (SLC) configured to store 1-bit information, each of the memory cells may be a cell configured to store information of 2 bits or more, such as a multi-level cell (MLC), a triple-level cell (TLC), and a quadruple-level cell (QLC). The 3D memory cell array may include a vertical NAND string in which at least one memory cell is vertically oriented and located on another memory cell.

Voltages VCC, VCCQ1, and VCCQ2 may be applied as power supply voltages to the UFS device 3200. The voltage VCC may be a main power supply voltage for the UFS device 3200 and be in a range of 2.4 V to 3.6 V. The voltage VCCQ1 may be a power supply voltage for supplying a low voltage mainly to the UFS device controller 3210 and be in a range of 1.14 V to 1.26 V. The voltage VCCQ2 may be a power supply voltage for supplying a voltage, which is lower than the voltage VCC and higher than the voltage VCCQ1, mainly to an I/O interface, such as the MIPI M-PHY 3251, and be in a range of 1.7 V to 1.95 V. The power supply voltages may be supplied through the regulator 3260 to respective components of the UFS device 3200. The regulator 3260 may be implemented as a set of unit regulators respectively connected to different ones of the power supply voltages described above.

In some implementations, the UFS system 3000 may be the UFS system 1000 or 2000 described with reference to FIGS. 1 to 13. For example, the UFS device 3200 may actively and/or autonomously change the power mode of the UIC layers 3150 and 3250 based on an internal operation status.

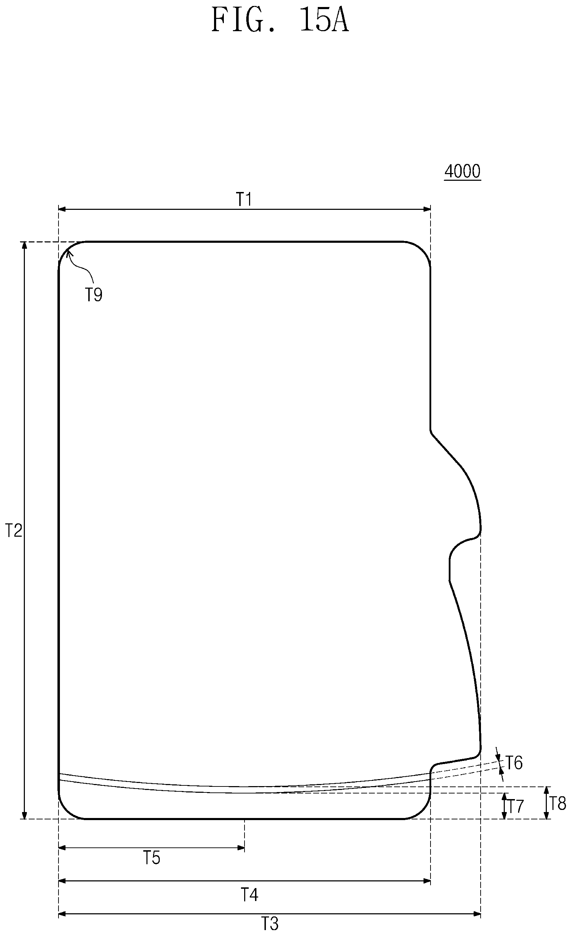

FIGS. 15A to 15C are diagrams of an example of a form factor of a UFS card 4000. When the UFS device 3200 described with reference to FIG. 14 is implemented as the UFS card 4000, an outer appearance of the UFS card 4000 may be as shown in FIGS. 15A to 15C.

FIG. 15A is a top view of an example of the UFS card 4000. Referring to FIG. 15A, it can be seen that the UFS card 4000 follows a shark fin-shaped design. In FIG. 15A, the UFS card 4000 may have dimensions shown in Table 1 below as an example.

**[Table 1]**

| **Item** | **Dimension (mm)** |
|---|---|
| T1 | 9.70 |
| T2 | 15.00 |
| T3 | 11.00 |
| T4 | 9.70 |
| T5 | 5.15 |
| T6 | 0.25 |
| T7 | 0.60 |
| T8 | 0.75 |
| T9 | 0.80 |

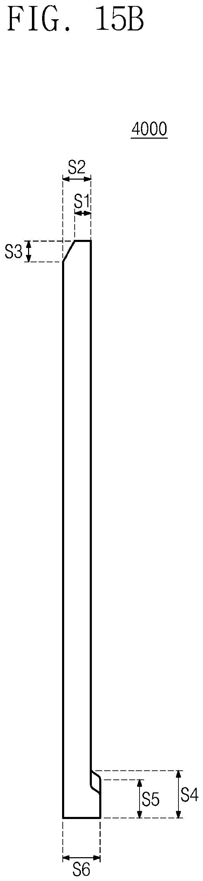

FIG. 15B is a side view of the UFS card 4000. In FIG. 15B, the UFS card 4000 may have dimensions shown in Table 2 below as an example.

**[Table 2]**

| **Item** | **Dimension (mm)** |
|---|---|
| S1 | 0.74±0.06 |
| S2 | 0.30 |
| S3 | 0.52 |
| S4 | 1.20 |
| S5 | 1.05 |
| S6 | 1.00 |

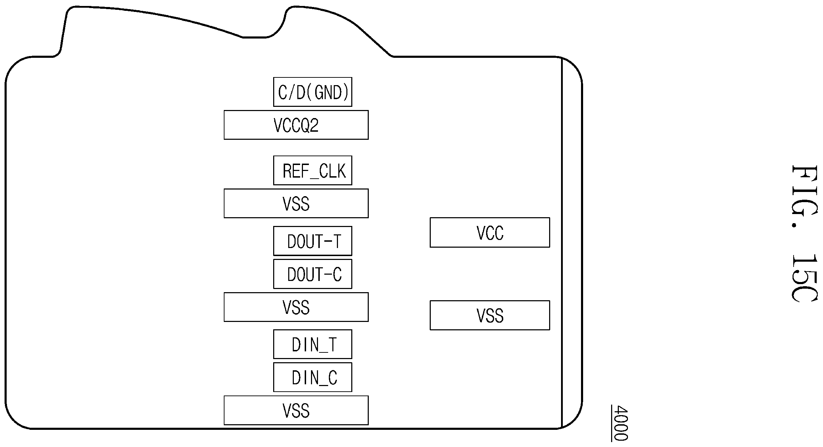

FIG. 15C is a bottom view of the UFS card 4000. Referring to FIG. 15C, a plurality of pins for electrical contact with a UFS slot may be formed on a bottom surface of the UFS card 4000. Functions of each of the pins will be described below. Based on symmetry between a top surface and the bottom surface of the UFS card 4000, some pieces (e.g., T1 to T5 and T9) of information about the dimensions described with reference to FIG. 15A and Table 1 may also be applied to the bottom view of the UFS card 400, which is shown in FIG. 15C.

A plurality of pins for an electrical connection with a UFS host may be formed on the bottom surface of the UFS card 4000. Referring to FIG. 15C, a total number of pins may be 12. Each of the pins may have a rectangular shape, and signal names corresponding to the pins may be as shown in FIG. 15C. Specific information about each of the pins will be understood with reference to Table 3 below and the above description presented with reference to FIG. 14.

**[Table 3]**

| **No.** | **Signal Name** | **Description** | **Dimension (mm²)** |
|---|---|---|---|
| 1 | Vss | Ground (GND) | 3.00 × 0.72±0.05 |
| 2 | DIN_C | Differential input signals input from a host to the UFS card 4000 (DIN_C is a negative node, and DIN_T is a positive node) | 1.50 × 0.72±0.05 |
| 3 | DIN_T | | |
| 4 | Vss | Ground (GND) | 3.00 × 0.72±0.05 |
| 5 | DOUT_C | Differential output signals output from the UFS card 4000 to the host (DOUT_C is a n egative node, and DOUT_T is a positive no de) | 1.50 × 0.72±0.05 |
| 6 | DOUT_T | | |
| 7 | Vss | Ground (GND) | 3.00 × 0.72±0.05 |
| 8 | REF_CLK | Reference clock signal provided from the h ost to the UFS card 4000 | 1.50 × 0.72±0.05 |
| 9 | VCCQ2 | Power supply voltage provided mainly to a PHY interface or a controller and having a lower value than voltage Vcc | 3.00 × 0.72±0.05 |
| 10 | C/D(GND) | Card detection signal | 1.50 × 0.72±0.05 |
| 11 | Vss | Ground (GND) | 3.00 × 0.80±0.05 |
| 12 | Vcc | Main power supply voltage | |

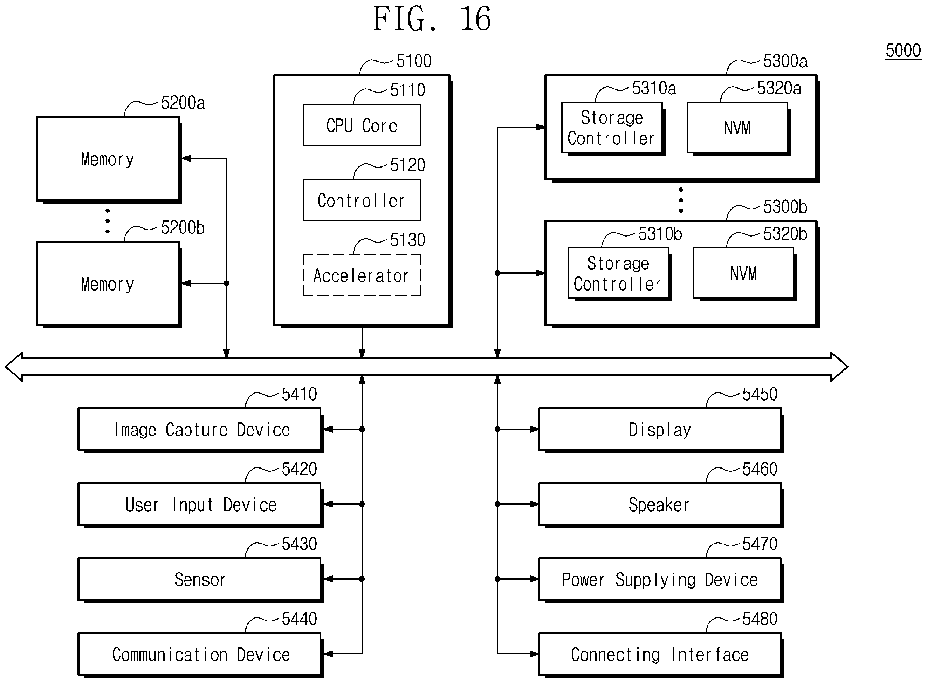

FIG. 16 is a diagram of an example of a system 5000 including one of the described storage devices. The system 5000 of FIG. 16 may basically be a mobile system, such as a portable communication terminal (e.g., a mobile phone), a smartphone, a tablet personal computer (PC), a wearable device, a healthcare device, or an Internet of Things (IOT) device. However, the system 5000 of FIG. 16 is not necessarily limited to the mobile system and may be a PC, a laptop computer, a server, a media player, or an automotive device (e.g., a navigation device).

Referring to FIG. 16, the system 5000 includes a main processor 5100, memories (e.g., 5200a and 5200b), and storage devices (e.g., 5300a and 5300b). In addition, the system 5000 may include at least one of an image capturing device 5410, a user input device 5420, a sensor 5430, a communication device 5440, a display 5450, a speaker 5460, a power supplying device 5470, and a connecting interface 5480.

The main processor 5100 may control all operations of the system 5000, more specifically, operations of other components included in the system 5000. The main processor 5100 may be implemented as a general-purpose processor, a dedicated processor, or an application processor.

The main processor 5100 may include at least one CPU core 5110 and further include a controller 5120 configured to control the memories 5200a and 5200b and/or the storage devices 5300a and 5300b. In some implementations, the main processor 5100 may further include an accelerator 5130, which is a dedicated circuit for a high-speed data operation, such as an artificial intelligence (AI) data operation. The accelerator 5130 may include a graphics processing unit (GPU), a neural processing unit (NPU), and/or a data processing unit (DPU) and be implemented as a chip that is physically separate from the other components of the main processor 5100.

The memories 5200a and 5200b may be used as main memory devices of the system 1000. Although each of the memories 5200a and 5200b may include a volatile memory, such as static random access memory (SRAM) and/or dynamic RAM (DRAM), each of the memories 5200a and 5200b may include non-volatile memory, such as a flash memory, phase-change RAM (PRAM) and/or resistive RAM (RRAM). The memories 5200a and 5200b may be implemented in the same package as the main processor 5100.

The storage devices 5300a and 5300b may serve as non-volatile storage devices configured to store data regardless of whether power is supplied thereto and have larger storage capacity than the memories 5200a and 5200b. The storage devices 5300a and 5300b may respectively include storage controllers (STRG CTRL) 5310a and 5310b and NVMs (Non-Volatile Memories) 5320a and 5320b configured to store data via the control of the storage controllers 5310a and 5310b. Although the NVMs 5320a and 5320b may include flash memories having a two-dimensional (2D) structure or a three-dimensional (3D) V-NAND structure, the NVMs 5320a and 5320b may include other types of NVMs, such as PRAM and/or RRAM.

The storage devices 5300a and 5300b may be physically separated from the main processor 5100 and included in the system 5000 or implemented in the same package as the main processor 5100. In addition, the storage devices 5300a and 5300b may have types of solid-state devices (SSDs) or memory cards and be removably combined with other components of the system 5000 through an interface, such as the connecting interface 5480 that will be described below. The storage devices 5300a and 5300b may be devices to which a standard protocol, such as a universal flash storage (UFS), an embedded multi-media card (eMMC), or a non-volatile memory express (NVMe), is applied, without being limited thereto.

The image capturing device 5410 may capture still images or moving images. The image capturing device 5410 may include a camera, a camcorder, and/or a webcam.

The user input device 5420 may receive various types of data input by a user of the system 5000 and include a touch pad, a keypad, a keyboard, a mouse, and/or a microphone.

The sensor 5430 may detect various types of physical quantities, which may be obtained from the outside of the system 5000 and convert the detected physical quantities into electric signals. The sensor 5430 may include a temperature sensor, a pressure sensor, an illuminance sensor, a position sensor, an acceleration sensor, a biosensor, and/or a gyroscope sensor.

The communication device 5440 may transmit and receive signals between other devices outside the system 5000 according to various communication protocols. The communication device 5440 may include an antenna, a transceiver, and/or a modem.

The display 5450 and the speaker 5460 may serve as output devices configured to respectively output visual information and auditory information to the user of the system 5000.

The power supplying device 5470 may appropriately convert power supplied from a battery (not shown) embedded in the system 5000 and/or an external power source and supply the converted power to each of the components of the system 5000.

The connecting interface 5480 may provide a connection between the system 5000 and an external device, which is connected to the system 5000 and capable of transmitting and receiving data to and from the system 5000. The connecting interface 5480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In some implementations, each of the storage devices 5300a and 5300b may be the UFS device 1200 described with reference to FIGS. 1 to 13, and the main processor 5100 may be the UFS host 1100 described with reference to FIGS. 1 to 13. For example, each of the storage device 5300a and 5300b may actively change the power mode, based on the internal operation status.

According to the present disclosure, a UFS device may actively change a power mode of a transmission channel or a reception channel, based on an internal operation status. In this case, because the power mode of the transmission channel or the reception channel is controlled actively, individually, or independently, depending on the internal operation status of the UFS device, a time during which the transmission channel or the reception channel is unnecessarily maintained in a high-speed mode may be shortened. Accordingly, the power consumption of the UFS device or a UFS system is reduced.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

Embodiments are set out in the following clauses:
Clause 1. An operation method of a universal flash storage (UFS) system that includes a UFS host and a UFS device, the method comprising:
   setting a power mode of a reception channel and a transmission channel between the UFS host and the UFS device to a high-speed mode, through an initialization operation; and
   changing, by the UFS device, the power mode of the reception channel or the transmission channel to a low-speed mode based on an internal operation status of the UFS device,
   wherein the power mode indicates a link speed of the reception channel or the transmission channel.
Clause 2. The method of clause 1, wherein the changing of the power mode of the reception channel or the transmission channel to the low-speed mode, by the UFS device, based on the internal operation status of the UFS device includes:
   setting, by the UFS device, parameters of a transmitter or a receiver of a UFS device UFS interconnect layer (UIC) of the UFS device to a value corresponding to the low-speed mode;
   transmitting, by the UFS device, a first power mode change request to the UFS host;
   setting, by the UFS host, parameters of a receiver or a transmitter of an UFS host UIC of the UFS host to a value corresponding to the low-speed mode, in response to the first power mode change request; and
   transmitting, by the UFS host, a first power mode change confirmation to the UFS device.
Clause 3. The method of clause 1 or clause 2, further comprising:
   detecting that the internal operation status corresponds to an idle state of the reception channel; and
   in response to detecting that the internal operation status indicates the idle state of the reception channel, changing, by the UFS device, the power mode of the reception channel to the low-speed mode.
Clause 4. The method of any of clauses 1-3, further comprising:
   detecting that the internal operation status corresponds to an idle state of the transmission channel; and
   in response to detecting that the internal operation status indicates the idle state of the transmission channel, changing, by the UFS device, the power mode of the transmission channel to the low-speed mode.
Clause 5. The method of any of clauses 1-4, further comprising:
   changing, by the UFS host, the power mode of the reception channel or the transmission channel from the low-speed mode to the high-speed mode.

## Claims

1. An operation method of a universal flash storage (UFS) device that is configured to communicate with a UFS host through a device physical layer, the method comprising:
monitoring an internal operation status;
changing a power mode of the device physical layer to a low-speed mode based on the internal operation status;
transmitting a first power mode change request to the UFS host;
receiving a first power mode change confirmation from the UFS host; and
operating based on the low-speed mode with the UFS host through the device physical layer, in response to receiving the first power mode change confirmation.

2. The method of claim 1, wherein the device physical layer is a UFS interconnect layer (UIC) including a mobile industry processor interface (MIPI) Unipro and an MIPI M-PHY.

3. The method of claim 1 or claim 2, wherein the UFS host changes a power mode of a host physical layer physically connected to the device physical layer to the low-speed mode, in response to the first power mode change request.

4. The method of any preceding claim, wherein the device physical layer of the UFS device and a host physical layer of the UFS host are set to a high-speed mode through a linkup of an initialization operation.

5. The method of any preceding claim, wherein changing of the power mode of the device physical layer to the low-speed mode based on the internal operation status includes:
detecting that the internal operation status indicates an idle state of a reception channel; and
in response to detecting that the internal operation status indicates the idle state of the reception channel, setting parameters of a transmitter of the device physical layer to a value corresponding to the low-speed mode.

6. The method of any preceding claim, wherein changing of the power mode of the device physical layer to the low-speed mode based on the internal operation status includes:
detecting that the internal operation status indicates an idle state of a transmission channel; and
in response to detecting the internal operation status indicates the idle state of the transmission channel or that a write buffer is full, setting parameters of a receiver of the device physical layer to a value corresponding to the low-speed mode.

7. The method of any preceding claim, wherein changing of the power mode of the device physical layer to the low-speed mode based on the internal operation status includes:
detecting that the internal operation status indicates that garbage collection is performed; and
in response to detecting that the internal operation status indicates that the garbage collection is performed, setting parameters of each of a receiver and a transmitter of the device physical layer to a value corresponding to the low-speed mode.

8. The method of any preceding claim, further comprising:
changing the power mode of the device physical layer from the low-speed mode to a high-speed mode based on the internal operation status;
transmitting a second power mode change request to the UFS host; and
receiving a second power mode change confirmation from the UFS host.

9. The method of any preceding claim, further comprising:
receiving a second power mode change request from the UFS host;
in response to receiving the second power mode change request, changing the power mode of the device physical layer to a high-speed mode; and
transmitting a second power mode change response to the UFS host.

10. The method of claim 9, further comprising:
receiving a command UFS protocol information unit (UPIU) from the UFS host through the device physical layer; and
performing an operation corresponding to the command UPIU.

11. A universal flash storage (UFS) device comprising:
a memory device;
a UFS device UFS interconnect layer (UIC) configured to communicate with a UFS host through a reception channel and a transmission channel; and
a UFS device controller configured to control the memory device, based on a command received from the UFS host through the UFS device UIC,
wherein the UFS device controller is further configured to:
monitor an internal operation status of the UFS device; and
change a power mode of the reception channel or the transmission channel from a high-speed mode to a low-speed mode, based on the internal operation status.

12. The UFS device of claim 11, wherein the UFS device UIC includes a mobile industry processor interface (MIPI) Unipro and an MIPI M-PHY.

13. The UFS device of claim 11 or claim 12, wherein the UFS device controller includes:
a device manager configured to transmit a first service access point to the UFS device UIC, based on the internal operation status,
wherein the UFS device UIC is further configured to set parameters of a transmitter connected to the reception channel or parameters of a receiver connected to the transmission channel to a value corresponding to the low-speed mode, in response to receiving the first service access point.

14. The UFS device of claim 13, wherein the UFS device UIC is further configured to transmit a first power mode change request to the UFS host, in response to receiving the first service access point.

15. The UFS device of any of claims 11-14, wherein the UFS device UIC is further configured to:
receive a second power mode change request from the UFS host; and
set parameters of a transmitter connected to the reception channel or a receiver connected to the transmission channel to a value corresponding to the high-speed mode in response to receiving the second power mode change request.
